# EUROPEAN PATENT SPECIFICATION

(11) **EP 4 033 853 B1**
(45) Date of publication and mention of the grant of the patent: **10.04.2024**
(21) Application number: 20864412.0
(22) Date of filing: 04.09.2020
(51) Int. Cl.: H04W 76/23, H04W 76/27, H04W 92/18, H04W 76/30

(54) **METHODS AND TERMINALS FOR CHANGING BEARER CONFIGURATION OF DIRECT COMMUNICATION INTERFACE**
VERFAHREN UND ENDGERÄTE ZUR ÄNDERUNG DER TRÄGERKONFIGURATION EINER DIREKTEN KOMMUNIKATIONSSCHNITTSTELLE
PROCÉDÉ ET TERMINAUX PERMETTANT DE CHANGER LA CONFIGURATION DE PORTEUSE D'UNE INTERFACE DE COMMUNICATION DIRECTE

(30) Priority: 20.09.2019 CN 201910895272
(43) Date of publication of application: 27.07.2022
(60) Divisional application: 24156527.4
(73) Proprietor: Datang Mobile Communications Equipment Co., Ltd., Beijing 100085 (CN)
(72) Inventor: ZHAO, Yali, Beijing 100083 (CN)
(74) Representative: dompatent von Kreisler Selting Werner - Partnerschaft von Patent- und Rechtsanwälten mbB
(86) International application number: PCT/CN2020/113402
(87) International publication number: WO 2021/052194

(56) References cited:
- EP-A1- 3 998 836
- WO-A1-2015/163639
- WO-A1-2021/057533
- CN-A- 110 139 396
- CN-A- 110 225 599
- SAMSUNG: "Discussion on SLRB handling at transition from IDLE/INACTIVE to CONNECTED", 3GPP DRAFT; R2-1911322, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20190826 - 20190830 16 August 2019 (2019-08-16), XP051769079, Retrieved from the Internet: URL:http://www.3gpp.org/ftp/tsg_ran/WG2_RL 2/TSGR2_107/Docs/R2-1911322.zip [retrieved on 2019-08-16]
- ZTE CORPORATION ET AL: "Discussion on QoS support for NR V2X", 3GPP DRAFT; R2-1906496 DISCUSSION ON QOS SUPPORT FOR NR V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20190513 - 20190517 13 May 2019 (2019-05-13), XP051729961, Retrieved from the Internet: URL:http://www.3gpp.org/ftp/Meetings%5F3GP P%5FSYNC/RAN2/Docs/R2%2D1906496%2Ezip [retrieved on 2019-05-13]
- HUAWEI ET AL: "Cell reselection for NR SL communication", 3GPP DRAFT; R2-1902052 CELL RESELECTION FOR NR SL COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20190225 - 20190301 15 February 2019 (2019-02-15), XP051603398, Retrieved from the Internet: URL:http://www.3gpp.org/ftp/tsg%5Fran/WG2% 5FRL2/TSGR2%5F105/Docs/R2%2D1902052%2Ezip [retrieved on 2019-02-15]
- HUAWEI (RAPPORTEUR): "Summary of [103bis#37][NR/V2X] - NR sidelink design, CP aspects", 3GPP DRAFT; R2-1816515 SUMMARY OF [103BIS#37][NR V2X] - NR SIDELINK DESIGN, CP ASPECTS, 3RD GENERATION PARTNERSHIP PROJECT (3GPP), MOBILE COMPETENCE CENTRE ; 650, ROUTE DES LUCIOLES ; F-06921 SOPHIA-A , vol. RAN WG2, no. Spokane, USA; 20181112 - 20181116 12 November 2018 (2018-11-12), XP051556093, Retrieved from the Internet: URL:http://www.3gpp.org/ftp/Meetings%5F3GP P%5FSYNC/RAN2/Docs/R2%2D1816515%2Ezip [retrieved on 2018-11-12]
- HUAWEI ET AL: "Details about NR SL QoS handling", 3GPP DRAFT; R2-1907454 DETAILS ABOUT NR SL QOS HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20190513 - 20190517 2 May 2019 (2019-05-02), XP051711736, Retrieved from the Internet: URL:http://www.3gpp.org/ftp/tsg%5Fran/WG2% 5FRL2/TSGR2%5F106/Docs/R2%2D1907454%2Ezip [retrieved on 2019-05-02]
- ZTE CORPORATION et al.: ""Discussion on QoS support for NR V2X"", "3GPP TSG RAN WG2 Meeting #106 R2-1906496", 3 May 2019 (2019-05-03), XP051710811,
- LG ELECTRONICS INC.: ""[Running CR] Introduction of 5G V2X with NR Sidelink"", "3GPP TSG-RAN WG2 Meeting #106 R2-1908299", 13 June 2019 (2019-06-13), XP051751367,

## Description

### TECHNICAL FIELD

The present disclosure relates to the field of communications technology, in particular to a sidelink interface bearer configuration change method and a terminal.

### BACKGROUND

Protocols in the related art defines that the configuration information of the Sidelink Radio Bearer (SLRB) is related to the state of a sidelink transmitting terminal, wherein:

For a terminal whose Uu interface is in the Radio Resource Control CONNECTED (RRC_CONNECTED) state, the terminal needs to request the configuration information of the sidelink interface SLRB from the network through a dedicated signaling;

For a terminal whose Uu interface is in the Radio Resource Control IDLE, (RRC_IDLE) state or the Radio Resource Control INACTIVE (RRC_INACTIVE) state, the terminal needs to obtain the configuration information of the sidelink interface SLRB configured by the network through a System Information Block (SIB);

For a terminal in an Out Of Coverage (OOC) state, the terminal needs to obtain configuration information of the sidelink interface SLRB through pre-configuration information.

In the actual communication system, the terminal is constantly moving, and the state of the terminal on the Uu interface may change continuously. Once the state of the terminal is changed, how to process the currently established sidelink interface SLRB has become an urgent problem to be solved in the related art. R2-1911322 relates to discussion on SLRB handling at transition from IDLE/INACTIVE to CONNECTED. R2-1906496 relates to discussion on QoS support for NR V2X. R2-1902052 relates to cell reselection for NR SL communication. R2-1816515 relates to summary of [103bis#37][NR V2X] - NR sidelink design, CP aspects. R2-1907454 Details about NR SL QoS handling. WO2021057533A1 relates to configuration method and apparatus for sidelink wireless carrier. EP3998836A1 shows prior art according to Article 54(3) EPC and relates to an apparatus and a method for supporting vehicle-to-everything in wireless communication system. CN110225599A relates to a method and device for determining scheduling request configuration. CN110139396 relates to RRC state conversion method, terminal, CU, DU and computer readable storage medium. WO2015/163639A1 relates to a method and a device for establishing layer-2 entities for D2D communication system. R2-1908299 Running CR to 38 300 for 5G V2X with NR sidelink.

### SUMMARY

An object of the present disclosure is to provide a sidelink interface bearer configuration change method and a terminal, so as to solve the problem of how to process the currently established SLRB when the state of the terminal is changed in the related art. The scope of the present invention is determined only by the scope of the appended claims. More precisely, in one aspect, the present invention provides a sidelink interface bearer configuration change method, applied to a first terminal according to claim 1 and further detailed in the dependent claims referring back to this claim. A corresponding first terminal is provided in claim 10. On the other hand, the present invention provides a sidelink interface bearer configuration change method, applied to a second terminal according to claim 8 and further detailed in the dependent claims referring back to this claim. A corresponding second terminal is provided in claim 11.

In order to achieve the object, an embodiment of the present disclosure provides a sidelink interface bearer configuration change method, applied to a first terminal, wherein the first terminal is a sidelink interface transmitting terminal, the method includes: when a state of the first terminal is changed, obtaining sidelink radio bearer (SLRB) configuration information after the state of the first terminal is changed from a first network device serving the first terminal or from a protocol layer responsible for management of the SLRB configuration information of the first terminal; releasing an SLRB established by a current sidelink interface, or performing SLRB remapping of the sidelink interface according to the SLRB configuration information after the state of the first terminal is changed.

In an embodiment of the present disclosure, when a state of the first terminal is changed, obtaining SLRB configuration information after the state of the first terminal is changed from a first network device serving the first terminal or from a protocol layer responsible for management of the SLRB configuration information of the first terminal includes: when the state of the first terminal is changed, transmitting request information to the first network device serving the first terminal or to the protocol layer responsible for the management of the SLRB configuration information of the first terminal, and requesting to obtain the SLRB configuration information after the state of the first terminal is changed.

In an embodiment of the present disclosure, when a state of the first terminal is changed, obtaining SLRB configuration information after the state of the first terminal is changed from a first network device serving the first terminal or from a protocol layer responsible for management of the SLRB configuration information of the first terminal includes: when the state of the first terminal is changed to a Radio Resource Control CONNECTED (RRC_CONNECTED) state, obtaining the SLRB configuration information after the state of the first terminal is changed from the first network device serving the first terminal through an RRC dedicated signaling; or when the state of the first terminal is changed to an RRC_IDLE state or an RRC_INACTIVE state, obtaining the SLRB configuration information after the state of the first terminal is changed from the first network device serving the first terminal through a system information block (SIB); or when the state of the first terminal is changed to an Out Of Coverage (OOC) state, obtaining the SLRB configuration information after the state of the first terminal is changed from the protocol layer responsible for the management of the SLRB configuration information of the first terminal through inter-layer interaction.

In an embodiment of the present disclosure, the state of the first terminal is changed, includes one of the following: changing from an OOC state to an RRC_IDLE state or an RRC_INACTIVE state; changing from the RRC_IDLE state or the RRC_INACTIVE state to an RRC_CONNECTED state; changing from the RRC_CONNECTED state to the RRC_IDLE state or the RRC_INACTIVE state; reselecting a first terminal in the RRC_IDLE state from one cell to another cell; handing over a first terminal in the RRC_CONNECTED state from one cell to another cell.

In an embodiment of the present disclosure, the releasing an SLRB established by a current sidelink interface, or performing SLRB remapping of the sidelink interface according to the SLRB configuration information after the state of the first terminal is changed includes: after obtaining the SLRB configuration information after the state of the first terminal is changed, releasing the SLRB that has been established by the current sidelink interface, or, performing SLRB remapping of the sidelink interface according to the SLRB configuration information after the state of the first terminal is changed.

In an embodiment of the present disclosure, after obtaining SLRB configuration information after the state of the first terminal is changed from a first network device serving the first terminal or from a protocol layer responsible for management of the SLRB configuration information of the first terminal, the method further includes: transmitting indication information to a second terminal, wherein the second terminal is a communication terminal that forms a sidelink with the first terminal, and the indication information includes: a first type of indication information for releasing the currently established SLRB, or releasing the currently established SLRB and establishing a new SLRB, or a second type of indication information for indicating SLRB remapping of the sidelink interface.

In an embodiment of the present disclosure, the first type of indication information includes one of the following: an RRC signaling of the sidelink interface; a media access control control unit (MAC CE) of the sidelink interface; a physical layer signaling of the sidelink interfaces; a protocol data unit (PDU) of the sidelink interface, wherein the PDU is a data PDU or a control PDU, and the PDU is used to instruct the second terminal to release the SLRB that has been established by the current sidelink interface.

In an embodiment of the present disclosure, the RRC signaling of the sidelink interface carries at least one of the following information: a full configuration identifier of the sidelink interface; an identifier of the first terminal; an identifier of the second terminal; a radio bearer identifier or a logical channel identifier corresponding to an SLRB to be released between the first terminal and the second terminal; SLRB configuration information of an SLRB to be established between the first terminal and the second terminal.

In an embodiment of the present disclosure, a payload of the MAC CE of the sidelink interface is empty, or the payload of the MAC CE includes at least one of the following information: an identifier of the first terminal; an identifier of the second terminal; a radio bearer identifier or a logical channel identifier corresponding to an SLRB to be released between the first terminal and the second terminal; wherein, the radio bearer identifier or the logical channel identifier corresponding to the SLRB is a complete identifier or is an identifier indicated by a bitmap in an ascending or descending order of identifier numbers.

In an embodiment of the present disclosure, a MAC sub-header corresponding to the MAC CE includes the logical channel identifier, and the logical channel identifier is used to identify that the MAC CE is used for SLRB release.

In an embodiment of the present disclosure, the physical layer signaling of the sidelink interface includes at least one of the following information: 1 bit indication information, used to indicate to release all SLRBs of the current sidelink interface; an identifier of the first terminal; an identifier of the second terminal; a radio bearer identifier or a logical channel identifier corresponding to the SLRB to be released between the first terminal and the second terminal.

In an embodiment of the present disclosure, the second type of indication information includes at least one of the following: RRC signaling of the sidelink interface; PDU of the sidelink interface, the PDU is a data PDU or a control PDU, and the PDU is used to indicate that the first terminal has performed the SLRB remapping.

In an embodiment of the present disclosure, a content of the RRC signaling of the sidelink interface includes at least one of the following: SLRB configuration information before the state of the first terminal is changed; SLRB configuration information after the state of the first terminal is changed.

In an embodiment of the present disclosure, after transmitting the indication information to the second terminal, the method further comprises: receiving a response message sent by the second terminal.

In an embodiment of the present disclosure, the releasing the SLRB that has been established by the current sidelink interface, or, performing SLRB remapping of the sidelink interface according to the SLRB configuration information after the state of the first terminal is changed includes: after receiving the response message sent by the second terminal, releasing the SLRB that has been established by the current sidelink interface, or, performing the SLRB remapping of the sidelink interface according to the SLRB configuration information after the state of the first terminal is changed.

In an embodiment of the present disclosure, after releasing the SLRB that has been established by the current sidelink interface, the method further includes: establishing a target SLRB according to the SLRB configuration information.

In an embodiment of the present disclosure, the first network device is a serving base station, a serving distributed unit (DU) or a serving centralized unit (CU) of the first terminal; the protocol layer responsible for the management of the SLRB configuration information of the first terminal is an RRC layer or other protocol layers that store the SLRB configuration information.

In order to achieve the above object, an embodiment of the present disclosure provides a sidelink interface bearer configuration change method, applied to a second terminal, wherein the second terminal is a sidelink interface receiving terminal, the method includes: receiving indication information sent by a first terminal; and releasing an SLRB that has been established by a current sidelink interface according to the indication information, or performing an operation corresponding to SLRB remapping of the sidelink interface of the first terminal; or when a state of the second terminal is changed, obtaining SLRB configuration information after the state of the second terminal is changed from a second network device serving the second terminal or from a protocol layer responsible for management of the SLRB configuration information of the second terminal.

In an embodiment of the present disclosure, the indication information includes a first type of indication information for releasing the currently established SLRB, or releasing the currently established SLRB and establishing a new SLRB, or a second type of indication information for indicating SLRB remapping of the sidelink interface; the releasing the SLRB that has been established by a current sidelink interface according to the indication information, or performing an operation corresponding to SLRB remapping of the sidelink interface of the first terminal includes: releasing the SLRB that has been established by the current sidelink interface according to the first type of indication information; or, performing the operation corresponding to the SLRB remapping of the sidelink interface of the first terminal according to the second type of indication information.

In an embodiment of the present disclosure, the first type of indication information includes one of the following: an RRC signaling of the sidelink interface; a media access control control unit (MAC CE) of the sidelink interface; a physical layer signaling of the sidelink interfaces; a protocol data unit (PDU) of the sidelink interface, wherein the PDU is a data PDU or a control PDU, and the PDU is used to instruct the second terminal to release the SLRB that has been established by the current sidelink interface.

In an embodiment of the present disclosure, the RRC signaling of the sidelink interface carries at least one of the following information: a full configuration identifier of the sidelink interface; an identifier of the first terminal; an identifier of the second terminal; a radio bearer identifier or a logical channel identifier corresponding to an SLRB to be released between the first terminal and the second terminal; SLRB configuration information of an SLRB to be established between the first terminal and the second terminal.

In an embodiment of the present disclosure, a payload of the MAC CE of the sidelink interface is empty, or the payload of the MAC CE includes at least one of the following information: an identifier of the first terminal; an identifier of the second terminal; a radio bearer identifier or a logical channel identifier corresponding to an SLRB to be released between the first terminal and the second terminal; wherein, the radio bearer identifier or the logical channel identifier corresponding to the SLRB is a complete identifier or is an identifier indicated by a bitmap in an ascending or descending order of identifier numbers.

In an embodiment of the present disclosure, a MAC sub-header corresponding to the MAC CE includes the logical channel identifier, and the logical channel identifier is used to identify that the MAC CE is used for SLRB release.

In an embodiment of the present disclosure, the physical layer signaling of the sidelink interface includes at least one of the following information: 1 bit indication information, configured to indicate to release all SLRBs of the current sidelink interface; an identifier of the first terminal; an identifier of the second terminal; a radio bearer identifier or a logical channel identifier corresponding to the SLRB to be released between the first terminal and the second terminal.

In an embodiment of the present disclosure, the second type of indication information includes at least one of the following: RRC signaling of the sidelink interface; PDU of the sidelink interface, the PDU is a data PDU or a control PDU, and the PDU is used to indicate that the first terminal has performed SLRB remapping.

In an embodiment of the present disclosure, a content of the RRC signaling of the sidelink interface includes at least one of the following: SLRB configuration information before the state of the first terminal is changed; SLRB configuration information after the state of the first terminal is changed.

In an embodiment of the present disclosure, the indication information is the first type of indication information, and the method further includes: releasing the SLRB that has been established by the current sidelink interface according to the first type of indication information; when the first type of indication information includes establishing SLRB configuration information of an SLRB, establishing the SLRB according to the SLRB configuration information.

In an embodiment of the present disclosure, the performing an operation corresponding to SLRB remapping of the sidelink interface of the first terminal comprises at least one of the following: releasing the SLRB corresponding to the sidelink interface after receiving the second type of indication information; when an End Marker Control PDU of a service data adaptation protocol layer corresponding to the SLRB is received, releasing the SLRB corresponding to the End Marker Control PDU.

In an embodiment of the present disclosure, after releasing the SLRB corresponding to the sidelink interface or releasing the SLRB corresponding to the End Marker Control PDU, the performing an operation corresponding to SLRB remapping of the sidelink interface of the first terminal includes at least one of the following: when receiving a first data packet corresponding to a combination of a source address, a destination address and a logical channel identifier, establishing a corresponding SLRB and corresponding service data adaptation protocol (SDAP), packet data convergence protocol (PDCP) and radio link control (RLC) entities; when receiving a first data packet corresponding to a combination of the source address, the destination address, a transmission type and the logical channel identifier, establishing the corresponding SLRB and the corresponding SDAP, PDCP and RLC entities.

In an embodiment of the present disclosure, the performing an operation corresponding to SLRB remapping of the sidelink interface of the first terminal includes at least one of the following: performing SLRB reconfiguration according to the second type of indication information; after receiving the End Marker Control PDU corresponding to the SLRB, performing the SLRB reconfiguration according to the second type of indication information.

In an embodiment of the present disclosure, the method further includes: transmitting a response message to the first terminal.

In an embodiment of the present disclosure, the second network device is a serving base station, a serving distributed unit (DU) or a serving centralized unit (CU) of the second terminal; the protocol layer responsible for the management of the SLRB configuration information of the second terminal is an RRC layer or other protocol layers that store the SLRB configuration information.

In order to achieve the above object, an embodiment of the present disclosure provides a terminal, including: a transceiver, a memory, a processor, and a program stored on the memory and executed by the processor; the processor is used to read the program in the memory and perform the following processes: when a state of the first terminal is changed, obtaining sidelink radio bearer (SLRB) configuration information after the state of the first terminal is changed from a first network device serving the first terminal or from a protocol layer responsible for management of the SLRB configuration information of the first terminal; releasing an SLRB established by a current sidelink interface, or performing SLRB remapping of the sidelink interface according to the SLRB configuration information after the state of the first terminal is changed.

In an embodiment of the present disclosure, the processor is further configured to: when the state of the first terminal is changed, transmit request information to the first network device serving the first terminal or to the protocol layer responsible for the management of the SLRB configuration information of the first terminal, and request to obtain the SLRB configuration information after the state of the first terminal is changed.

In an embodiment of the present disclosure, the processor is further configured to: after obtaining the SLRB configuration information after the state of the first terminal is changed, release the SLRB that has been established by the current sidelink interface, or, perform SLRB remapping of the sidelink interface according to the SLRB configuration information after the state of the first terminal is changed.

In an embodiment of the present disclosure, the transceiver is configured to: transmit indication information to a second terminal, wherein the second terminal is a communication terminal that forms a sidelink with the first terminal, and the indication information includes: a first type of indication information for releasing the currently established SLRB, or releasing the currently established SLRB and establishing a new SLRB, or a second type of indication information for indicating SLRB remapping of the sidelink interface.

In an embodiment of the present disclosure, the first type of indication information includes one of the following: an RRC signaling of the sidelink interface; a media access control control unit (MAC CE) of the sidelink interface; a physical layer signaling of the sidelink interfaces; a protocol data unit (PDU) of the sidelink interface, wherein the PDU is a data PDU or a control PDU, and the PDU is used to instruct the second terminal to release the SLRB that has been established by the current sidelink interface.

In an embodiment of the present disclosure, the transceiver is further configured to: receive a response message sent by the second terminal.

In an embodiment of the present disclosure, the processor is further configured to: after receiving the response message sent by the second terminal, release the SLRB that has been established by the current sidelink interface, or, perform the SLRB remapping of the sidelink interface according to the SLRB configuration information after the state of the first terminal is changed.

In an embodiment of the present disclosure, the processor is further configured to: establish a target SLRB according to the SLRB configuration information.

In order to achieve the above object, an embodiment of the present disclosure provides a terminal, wherein the terminal is a first terminal, and the first terminal is a sidelink interface transmitting terminal, the terminal includes: a first obtaining module, configured to, when a state of the first terminal is changed, obtain sidelink radio bearer (SLRB) configuration information after the state of the first terminal is changed from a first network device serving the first terminal or from a protocol layer responsible for management of the SLRB configuration information of the first terminal; a first processing module, configured to release an SLRB established by a current sidelink interface, or performing SLRB remapping of the sidelink interface according to the SLRB configuration information after the state of the first terminal is changed.

In an embodiment of the present disclosure, the first obtaining module includes: a first obtaining unit, configured to, when the state of the first terminal is changed, transmit request information to the first network device serving the first terminal or to the protocol layer responsible for the management of the SLRB configuration information of the first terminal, and request to obtain the SLRB configuration information after the state of the first terminal is changed.

In an embodiment of the present disclosure, the first processing module includes: a first processing unit, configured to, after obtaining the SLRB configuration information after the state of the first terminal is changed, release the SLRB that has been established by the current sidelink interface, or, perform SLRB remapping of the sidelink interface according to the SLRB configuration information after the state of the first terminal is changed.

In an embodiment of the present disclosure, the terminal further includes: a first transmitting module, configured to transmit indication information to a second terminal, wherein the second terminal is a communication terminal that forms a sidelink with the first terminal, and the indication information includes: a first type of indication information for releasing the currently established SLRB, or releasing the currently established SLRB and establishing a new SLRB, or a second type of indication information for indicating SLRB remapping of the sidelink interface.

In an embodiment of the present disclosure, the first type of indication information includes one of the following: an RRC signaling of the sidelink interface; a media access control control unit (MAC CE) of the sidelink interface; a physical layer signaling of the sidelink interfaces; a protocol data unit (PDU) of the sidelink interface, wherein the PDU is a data PDU or a control PDU, and the PDU is used to instruct the second terminal to release the SLRB that has been established by the current sidelink interface.

In an embodiment of the present disclosure, the terminal further includes: a second transmitting module, configured to receive a response message sent by the second terminal.

In an embodiment of the present disclosure, the first processing module includes: a second processing unit, configured to, after receiving the response message sent by the second terminal, release the SLRB that has been established by the current sidelink interface, or, perform the SLRB remapping of the sidelink interface according to the SLRB configuration information after the state of the first terminal is changed.

In an embodiment of the present disclosure, the terminal further includes: a first establishing module, configured to establish a target SLRB according to the SLRB configuration information.

In order to achieve the above object, an embodiment of the present disclosure provides a terminal, including: a transceiver, a memory, a processor and a program stored in the memory and running on the processor, wherein the processor is used to read the program in the memory and execute the following processes: receiving indication information sent by a first terminal; and releasing an SLRB that has been established by a current sidelink interface according to the indication information, or performing an operation corresponding to SLRB remapping of the sidelink interface of the first terminal; or when a state of the second terminal is changed, obtaining SLRB configuration information after the state of the second terminal is changed from a second network device serving the second terminal or from a protocol layer responsible for management of the SLRB configuration information of the second terminal.

In an embodiment of the present disclosure, the indication information includes a first type of indication information for releasing the currently established SLRB, or releasing the currently established SLRB and establishing a new SLRB, or a second type of indication information for indicating SLRB remapping of the sidelink interface, the processor is further configured to: release the SLRB that has been established by the current sidelink interface according to the first type of indication information; or, perform the operation corresponding to the SLRB remapping of the sidelink interface of the first terminal according to the second type of indication information.

In an embodiment of the present disclosure, the first type of indication information includes one of the following: an RRC signaling of the sidelink interface; a media access control control unit (MAC CE) of the sidelink interface; a physical layer signaling of the sidelink interfaces; a protocol data unit (PDU) of the sidelink interface, wherein the PDU is a data PDU or a control PDU, and the PDU is used to instruct the second terminal to release the SLRB that has been established by the current sidelink interface.

In an embodiment of the present disclosure, the processor is further configured to: release the SLRB corresponding to the sidelink interface after receiving the second type of indication information; when an End Marker Control PDU of a service data adaptation protocol layer corresponding to the SLRB is received, release the SLRB corresponding to the End Marker Control PDU.

In an embodiment of the present disclosure, the processor is further configured to: when receiving a first data packet corresponding to a combination of a source address, a destination address and a logical channel identifier, establish a corresponding SLRB and corresponding service data adaptation protocol (SDAP), packet data convergence protocol (PDCP) and radio link control (RLC) entities; when receiving a first data packet corresponding to a combination of the source address, the destination address, a transmission type and the logical channel identifier, establish the corresponding SLRB and the corresponding SDAP, PDCP and RLC entities.

In an embodiment of the present disclosure, the processor is further configured to: perform SLRB reconfiguration according to the second type of indication information; after receiving the End Marker Control PDU corresponding to the SLRB, perform the SLRB reconfiguration according to the second type of indication information.

In an embodiment of the present disclosure, the transceiver is configured to: transmit a response message to the first terminal.

In order to achieve the object, an embodiment of the present disclosure provides a terminal, wherein the terminal is a second terminal, and the second terminal is a sidelink interface receiving terminal, the terminal includes: a second processing module, configured to receive indication information sent by a first terminal; and releasing an SLRB that has been established by a current sidelink interface according to the indication information, or performing an operation corresponding to SLRB remapping of the sidelink interface of the first terminal; or, a second obtaining module, configured to, when a state of the second terminal is changed, obtain SLRB configuration information after the state of the second terminal is changed from a second network device serving the second terminal or from a protocol layer responsible for management of the SLRB configuration information of the second terminal.

In an embodiment of the present disclosure, the indication information includes a first type of indication information for releasing the currently established SLRB, or releasing the currently established SLRB and establishing a new SLRB, or a second type of indication information for indicating SLRB remapping of the sidelink interface, the second processing module includes: a third processing unit, configured to release the SLRB that has been established by the current sidelink interface according to the first type of indication information; or, a fourth processing unit, configured to perform the operation corresponding to the SLRB remapping of the sidelink interface of the first terminal according to the second type of indication information.

In an embodiment of the present disclosure, the first type of indication information includes one of the following: an RRC signaling of the sidelink interface; a media access control control unit (MAC CE) of the sidelink interface; a physical layer signaling of the sidelink interfaces; a protocol data unit (PDU) of the sidelink interface, wherein the PDU is a data PDU or a control PDU, and the PDU is used to instruct the second terminal to release the SLRB that has been established by the current sidelink interface.

In an embodiment of the present disclosure, the second processing module includes: a first release unit, configured to release the SLRB corresponding to the sidelink interface after receiving the second type of indication information; a second release unit, configured to, when an End Marker Control PDU of a service data adaptation protocol layer corresponding to the SLRB is received, release the SLRB corresponding to the End Marker Control PDU.

In an embodiment of the present disclosure, the second processing module includes: a first establishment unit, configured to, when receiving a first data packet corresponding to a combination of a source address, a destination address and a logical channel identifier, establish a corresponding SLRB and corresponding service data adaptation protocol (SDAP), packet data convergence protocol (PDCP) and radio link control (RLC) entities; a second establishment unit, configured to, when receiving a first data packet corresponding to a combination of the source address, the destination address, a transmission type and the logical channel identifier, establish the corresponding SLRB and the corresponding SDAP, PDCP and RLC entities.

In an embodiment of the present disclosure, the second processing module includes: a first reconfiguration unit, configured to perform SLRB reconfiguration according to the second type of indication information; a second reconfiguration unit, configured to, after receiving the End Marker Control PDU corresponding to the SLRB, perform the SLRB reconfiguration according to the second type of indication information.

In an embodiment of the present disclosure, the terminal further includes: a third transmitting module, configured to transmit a response message to the first terminal.

In order to achieve the above object, an embodiment of the present disclosure provides a computer-readable storage medium with a computer program stored thereon, wherein the program is executed by a processor to implement the sidelink interface bearer configuration change method.

The beneficial effect of the above technical solutions are as follows.

In the sidelink interface bearer configuration change method according to an embodiment of the present disclosure, when the state of the first terminal is changed, the SLRB configuration information after the state of the first terminal is changed is obtained from the first network device serving the first terminal or the protocol layer responsible for the management of the SLRB configuration information; the SLRB that has been established by the current sidelink interface is released, or, according to the SLRB configuration information after the state of the first terminal is changed, the SLRB remapping of the sidelink interface is performed, so that when the state of the terminal is changed, the currently established SLRB can be effectively processed, and the sidelink interface bearer configuration can be updated in time.

### BRIEF DESCRIPTION OF THE DRAWINGS

FIG. 1 is a schematic flowchart of a sidelink interface bearer configuration change method according to an embodiment of the present disclosure;
FIG. 2 is another schematic flowchart of a sidelink interface bearer configuration change method according to an embodiment of the present disclosure;
FIG. 3 is a structural block diagram of a terminal according to an embodiment of the present disclosure;
FIG. 4 is a schematic diagram of modules of a terminal according to an embodiment of the present disclosure;
FIG. 5 is another structural block diagram of a terminal according to an embodiment of the present disclosure;
FIG. 6 is another schematic diagram of modules of a terminal according to an embodiment of the present disclosure;

### DETAILED DESCRIPTION

In order to make the technical problem, technical solution, and advantage to be solved by the present disclosure clearer, a detailed description will be given below in conjunction with the accompanying drawings and specific embodiments. The following embodiments including the Features of "releasing an SLRB established by a current sidelink interface after the state of the first terminal is changed" are not according to the invention and are present for illustration purposes only.

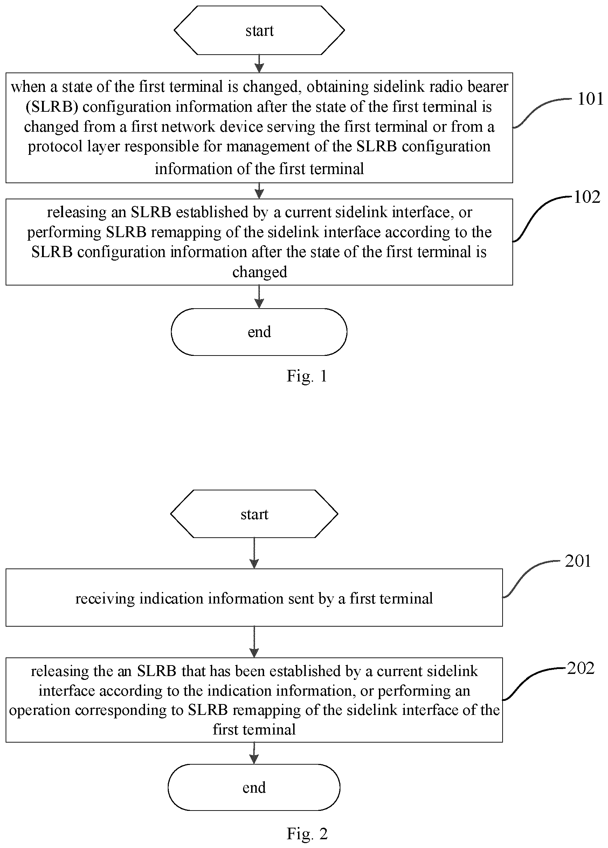

As shown in FIG. 1, a schematic flowchart of a sidelink interface bearer configuration change method provided by an embodiment of the present disclosure is applied to a first terminal, where the first terminal is a sidelink interface transmitting terminal, including:
Step 101: When a state of the first terminal is changed, obtaining sidelink radio bearer (SLRB) configuration information after the state of the first terminal is changed from a first network device serving the first terminal or from a protocol layer responsible for management of the SLRB configuration information of the first terminal;
As an optional implementation, this step may specifically include:
   When the state of the first terminal is changed, transmitting request information to the first network device serving the first terminal or to the protocol layer responsible for the management of the SLRB configuration information of the first terminal, and requesting to obtain the SLRB configuration information after the state of the first terminal is changed.

That is to say, when the state of the first terminal is changed, the request information is sent to the first network device serving the first terminal or to the protocol layer responsible for the management of the SLRB configuration information of the first terminal; the SLRB configuration information after the state of the first terminal is changed that is returned by the first network device or the protocol layer responsible for the management of the SLRB configuration information of the first terminal based on the request information is obtained.

As another optionally implementation, this step may specifically include:
when the state of the first terminal is changed to an RRC_CONNECTED state, obtaining the SLRB configuration information after the state of the first terminal is changed from the first network device serving the first terminal through an RRC dedicated signaling; or,
when the state of the first terminal is changed to an RRC_IDLE state or an RRC_INACTIVE state, obtaining the SLRB configuration information after the state of the first terminal is changed from the first network device serving the first terminal through a system information block (SIB); or,
when the state of the first terminal is changed to an Out Of Coverage (OOC) state, obtaining the SLRB configuration information after the state of the first terminal is changed from the protocol layer responsible for the management of the SLRB configuration information of the first terminal through inter-layer interaction.

It should be noted that, when the state of the first terminal is changed to the RRC _CONNECTED state, the first terminal requests from the first network device to obtain the SLRB configuration information after the state of the first terminal is changed.

When the state of the first terminal is changed to the RRC_IDLE state or the RRC_INACTIVE state, the first terminal obtains the SLRB configuration information after the state of the first terminal is changed configured by the first network device by reading a System Information Block (SIB);
When the state of the first terminal is changed to an OOC state, the protocol layer responsible for the management of the SLRB configuration information of the first terminal that obtains the SLRB configuration information after the state of the first terminal is changed specifically refers to an RRC layer or other protocol layers that store SLRB configuration information.

Optionally, the state of the first terminal is changed, including one of the following:
Changing from OOC state to RRC_IDLE state or RRC_INACTIVE state;
Changing from RRC_IDLE state or RRC_INACTIVE state to RRC_CONNECTED state;
Changing from RRC_CONNECTED state to RRC_IDLE state or RRC_INACTIVE state;
Reselecting a first terminal in the RRC_IDLE state from one cell to another cell;
Handing over a first terminal in the RRC _CONNECTED state from one cell to another cell.

Here, optionally, the first network device is a serving base station, a serving distributed unit DU or a serving centralized unit CU of the first terminal;
The protocol layer responsible for the management of the SLRB configuration information of the first terminal is the RRC layer or other protocol layers that store the SLRB configuration information.

Step 102: Releasing an SLRB established by a current sidelink interface, or performing SLRB remapping of the sidelink interface according to the SLRB configuration information after the state of the first terminal is changed.

As an optional implementation, this step may specifically include:
After obtaining the SLRB configuration information after the state of the first terminal is changed, releasing the SLRB that has been established by the current sidelink interface, or, performing SLRB remapping of the sidelink interface according to the SLRB configuration information after the state of the first terminal is changed.

That is to say, the moment of triggering the execution of this step is after obtaining the SLRB configuration information after to the state of the first terminal is changed.

In the sidelink interface bearer configuration change method according to an embodiment of the present disclosure, when the state of the first terminal is changed, the SLRB configuration information after the state of the first terminal is changed is obtained from the first network device serving the first terminal or the protocol layer responsible for the management of the SLRB configuration information; the SLRB that has been established by the current sidelink interface is released, or, according to the SLRB configuration information after the state of the first terminal is changed, the SLRB remapping of the sidelink interface is performed, so that when the state of the terminal is changed, the currently established SLRB can be effectively processed, and the sidelink interface bearer configuration can be updated in time.

Based on the embodiment shown in FIG. 1, as an optional implementation, after step 102, the method may further include:
Transmitting indication information to a second terminal, wherein the second terminal is a communication terminal that forms a sidelink with the first terminal, and the indication information includes: a first type of indication information for releasing the currently established SLRB or releasing the currently established SLRB and establishing a new SLRB, or a second type of indication information for indicating SLRB remapping of the sidelink interface.

Optionally, the first type of indication information includes one of the following:
An RRC signaling of the sidelink interface;
a media access control control unit (MAC CE) of the sidelink interface;
a physical layer signaling of the sidelink interfaces;
a protocol data unit (PDU) of the sidelink interface, wherein the PDU is a data PDU or a control PDU, and the PDU is used to instruct the second terminal to release the SLRB that has been established by the current sidelink interface.

Wherein, optionally, the RRC signaling of the sidelink interface carries at least one of the following information:
A full configuration identifier of the sidelink interface;
An identifier of the first terminal;
An identifier of the second terminal;
a radio bearer identifier or a logical channel identifier corresponding to an SLRB to be released between the first terminal and the second terminal;
SLRB configuration information of an SLRB to be established between the first terminal and the second terminal.

Optionally, a payload of the MAC CE of the sidelink interface is empty, or the payload of the MAC CE includes at least one of the following information:
the identifier of the first terminal;
the identifier of the second terminal;
a radio bearer identifier or a logical channel identifier corresponding to an SLRB to be released between the first terminal and the second terminal; wherein, the radio bearer identifier or the logical channel identifier corresponding to the SLRB is a complete identifier or is an identifier indicated by a bitmap in an ascending or descending order of identifier numbers.

Here, the radio bearer identifier or the logical channel identifier corresponding to the SLRB to be released may be a complete identifier. The radio bearer identifier or the logical channel identifier corresponding to the SLRB to be released may also be an identifier indicated by a bitmap in ascending or descending order of the identifier numbers. Specifically, the radio bearer identifier or the logical channel identifier corresponding to the SLRB to be released may be indicated by the bitmap. The bitmap is that 1 bit corresponds to one radio bearer identifier or one logical channel identifier. If the value of the bit is 1, it indicates that the SLRB needs to be released.

Further, a MAC sub-header corresponding to the MAC CE includes a logical channel identifier, and the logical channel identifier is used to identify that the MAC CE is used for SLRB release.

That is to say, a new logical channel identifier is introduced into the MAC sub-header corresponding to the MAC CE, which is used to identify that the MAC CE is for release of the sidelink interface bearer.

When the indication information received by the sidelink interface receiving terminal includes the new logical channel identifier in the MAC sub-header corresponding to the MAC CE, the sidelink interface receiving terminal can use the indication information to release the currently established SLRB of the sidelink interface.

Optionally, the physical layer signaling of the sidelink interface includes at least one of the following information:
1 bit indication information, configured to indicate to release all SLRBs of the current sidelink interface;
the identifier of the first terminal;
the identifier of the second terminal;
the radio bearer identifier or the logical channel identifier corresponding to the SLRB to be released between the first terminal and the second terminal.

Optionally, the second type of indication information includes at least one of the following:
RRC signaling of the sidelink interface;
PDU of the sidelink interface, the PDU is a data PDU or a control PDU, and the PDU is used to indicate that the first terminal has performed SLRB remapping.

Further, the content of the RRC signaling of the sidelink interface includes at least one of the following:
SLRB configuration information before the state of the first terminal is changed;
SLRB configuration information after the state of the first terminal is changed.

As an optional implementation, after transmitting the indication information to the second terminal, the method may further include:
Receiving a response message sent by the second terminal.

As an optional implementation, step 102 of this method may specifically include:
After receiving the response message sent by the second terminal, releasing the SLRB established by the current sidelink interface, or performing the SLRB remapping of the sidelink interface according to the SLRB configuration information after the state of the first terminal is changed.

That is to say, the moment of triggering the execution of step 102 of the present method may also be after the response message sent by the second terminal is received.

It should be noted that, whether it is to release the SLRB that has been established by the current sidelink interface after obtain the SLRB configuration information after to the state of the first terminal is changed, or release the SLRB that has been established by the current sidelink interface after receiving the response message sent by the second termina, after releasing the SLRB that has been established by the current sidelink interface, the method may further include:
Establishing a target SLRB according to the SLRB configuration information.

That is, a new SLRB is established according to the SLRB configuration information after the state of the first terminal is changed.

In the sidelink interface bearer configuration change method of the embodiment of the present disclosure, when the state of the first terminal is changed, the SLRB configuration information after the state of the first terminal is changed is obtained from the first network device serving the first terminal or the protocol layer responsible for the management of the SLRB configuration information; the SLRB that has been established by the current sidelink interface is released, or, according to the SLRB configuration information after the state of the first terminal is changed, the SLRB remapping of the sidelink interface is performed, so that when the state of the terminal is changed, the currently established SLRB can be effectively processed, and the sidelink interface bearer configuration can be updated in time.

As shown in FIG. 2, a schematic flowchart of a sidelink interface bearer configuration change method provided by an embodiment of the present disclosure is applied to a second terminal, where the second terminal is a sidelink interface receiving terminal, including:
Step 201: Receiving indication information sent by a first terminal;
In this step, the indication information includes a first type of indication information used to release the currently established SLRB or release the currently established SLRB and establish a new SLRB, or the second type of indication information used to indicate SLRB remapping of the sidelink interface.

Step 202: Releasing the SLRB that has been established by a current sidelink interface according to the indication information, or performing an operation corresponding to SLRB remapping of the sidelink interface of the first terminal.

For the first type of indication information or the second type of indication information included in the indication information in step 201, correspondingly, this step may specifically include:
releasing the SLRB that has been established by the current sidelink interface according to the first type of indication information; or,
performing the operation corresponding to the SLRB remapping of the sidelink interface of the first terminal according to the second type of indication information.

That is, if the indication information includes the first type of indication information, the SLRB that has been established by the current sidelink interface is released.

If the indication information includes the second type of indication information, an operation corresponding to the SLRB remapping of the sidelink interface of the first terminal is performed.

Alternatively, the method of the embodiment of the present disclosure includes:
When a state of the second terminal is changed, obtaining sidelink radio bearer (SLRB) configuration information after the state of the second terminal is changed from a second network device serving the second terminal or from a protocol layer responsible for management of the SLRB configuration information of the second terminal;
Here, optionally, the second network device is a serving base station, a serving distributed unit DU or a serving centralized unit CU of the second terminal;
The protocol layer responsible for the management of the SLRB configuration information of the second terminal is an RRC layer or other protocol layers that store the SLRB configuration information.

In the sidelink interface bearer configuration change method in the embodiment of the present disclosure, the indication information sent by the first terminal is received; the SLRB established by the current sidelink interface is released according to the indication information, or the operation corresponding to the SLRB remapping of the sidelink interface of the first terminal is performed, so that when the state of the terminal is changed, the currently established SLRB can be effectively processed, and the sidelink interface bearer configuration can be updated in time.

Optionally, the first type of indication information includes one of the following:
An RRC signaling of the sidelink interface;
a media access control control unit (MAC CE) of the sidelink interface;
a physical layer signaling of the sidelink interfaces;
a protocol data unit (PDU) of the sidelink interface, wherein the PDU is a data PDU or a control PDU, and the PDU is used to instruct the second terminal to release the SLRB that has been established by the current sidelink interface.

Wherein, optionally, the RRC signaling of the sidelink interface carries at least one of the following information:
A full configuration identifier of the sidelink interface;
An identifier of the first terminal;
An identifier of the second terminal;
a radio bearer identifier or a logical channel identifier corresponding to an SLRB to be released between the first terminal and the second terminal;
SLRB configuration information of an SLRB to be established between the first terminal and the second terminal.

Optionally, a payload of the MAC CE of the sidelink interface is empty, or the payload of the MAC CE includes at least one of the following information:
the identifier of the first terminal;
the identifier of the second terminal;
a radio bearer identifier or a logical channel identifier corresponding to an SLRB to be released between the first terminal and the second terminal; wherein, the radio bearer identifier or the logical channel identifier corresponding to the SLRB is a complete identifier or is an identifier indicated by a bitmap in an ascending or descending order of identifier numbers.

Here, the radio bearer identifier or the logical channel identifier corresponding to the SLRB to be released may be a complete identifier. The radio bearer identifier or the logical channel identifier corresponding to the SLRB to be released may also be an identifier indicated by a bitmap in ascending or descending order of the identifier numbers. Specifically, the radio bearer identifier or the logical channel identifier corresponding to the SLRB to be released may be indicated by the bitmap.

Further, a MAC sub-header corresponding to the MAC CE includes a logical channel identifier, and the logical channel identifier is used to identify that the MAC CE is used for SLRB release.

That is to say, a new logical channel identifier is introduced into the MAC sub-header corresponding to the MAC CE, which is used to identify that the MAC CE is for release of the sidelink interface bearer.

When the indication information received by the second terminal includes the new logical channel identifier in the MAC sub-header corresponding to the MAC CE, the second terminal can use the indication information to release the currently established SLRB of the sidelink interface.

Optionally, the physical layer signaling of the sidelink interface includes at least one of the following information:
1 bit indication information, configured to indicate to release all SLRBs of the current sidelink interface;
the identifier of the first terminal;
the identifier of the second terminal;
the radio bearer identifier or the logical channel identifier corresponding to the SLRB to be released between the first terminal and the second terminal.

Optionally, the second type of indication information includes at least one of the following:
RRC signaling of the sidelink interface;
PDU of the sidelink interface, the PDU is a data PDU or a control PDU, and the PDU is used to indicate that the first terminal has performed SLRB remapping.

Further, the content of the RRC signaling of the sidelink interface includes at least one of the following:
SLRB configuration information before the state of the first terminal is changed;
SLRB configuration information after the state of the first terminal is changed.

Based on the embodiment shown in FIG. 2, as an optional implementation, the indication information is the first type of indication information, and the method may further include:
Releasing the SLRB that has been established by the current sidelink interface according to the first type of indication information;
When the first type of indication information includes establishing SLRB configuration information of an SLRB, establishing the SLRB according to the SLRB configuration information.

For example, if the first type of indication information is the RRC signaling of the sidelink interface, and the RRC signaling carries the radio bearer identifier or the logical channel identifier corresponding to the SLRB to be released between the first terminal and the second terminal, and the SLRB configuration information of the SLRB to be established between the first terminal and the second terminal, the above steps can be performed.

Based on the embodiment shown in FIG. 2, as an optional implementation, performing the operation corresponding to the SLRB remapping of the sidelink interface of the first terminal in step 202 includes at least one of the following:
releasing the SLRB corresponding to the sidelink interface after receiving the second type of indication information;
When an End Marker Control PDU of a service data adaptation protocol layer corresponding to the SLRB is received, releasing the SLRB corresponding to the End Marker Control PDU.

Based on this, after releasing the SLRB corresponding to the sidelink interface or releasing the SLRB corresponding to the End Marker Control PDU, performing the operation corresponding to the SLRB remapping of the sidelink interface of the first terminal may further include at least one of the following:
When receiving a first data packet corresponding to a combination of a source address, a destination address and a logical channel identifier, establishing a corresponding SLRB and corresponding service data adaptation protocol (SDAP), packet data convergence protocol (PDCP) and radio link control (RLC) entities;
When receiving the first data packet corresponding to a combination of the source address, the destination address, a transmission type and the logical channel identifier, establishing the corresponding SLRB and the corresponding SDAP, PDCP and RLC entities.

It should be noted that the transmission type of the sidelink to which the above-mentioned performing the operation corresponding to the SLRB remapping of the sidelink interface of the first terminal is applicable is multicast, broadcast or unicast.

Based on the embodiment shown in FIG. 2, in an embodiment, the performing the operation corresponding to the SLRB remapping of the sidelink interface of the first terminal in step 202 includes at least one of the following:
performing SLRB reconfiguration according to the second type of indication information;
after receiving the End Marker Control PDU corresponding to the SLRB, performing the SLRB reconfiguration according to the second type of indication information.

Preferably, the transmission type of the sidelink to which the above-mentioned performing the operation corresponding to the SLRB remapping of the sidelink interface of the first terminal is applicable is unicast. Of course, other transmission types, such as multicast or broadcast, are not excluded.

Based on the embodiment shown in FIG. 2, as an optional implementation, the method may further include:
Transmitting a response message to the first terminal.
by receiving indication information sent by the first terminal, releasing the SLRB that has been established by the current sidelink interface according to the indication information, or performing the operation corresponding to the SLRB remapping of the sidelink interface of the first terminal, in this way, when the state of the terminal is changed, the currently established SLRB can be effectively processed, and the bearer configuration of the sidelink interface can be updated in time.

In the sidelink interface bearer configuration change method in the embodiment of the present disclosure, the indication information sent by the first terminal is received; according to the indication information, the SLRB established by the current sidelink interface is released, or the operation corresponding to the SLRB remapping of the sidelink interface of the first terminal, so that when the state of the terminal is changed, the currently established SLRB can be effectively processed, and the sidelink interface bearer configuration can be updated in time.

The following embodiments specifically describe the implementation process of the method of the present disclosure between the sidelink interface transmitting terminal and the sidelink interface receiving terminal (i.e., between the first terminal and the second terminal).

### Example 1

For the situation where the RRC state of the sidelink transmitting terminal is changed, the sidelink interface bearer configuration change method in this embodiment may specifically include:
S1: The sidelink transmitting terminal determines whether the RRC state has changed on an Uu interface of the sidelink transmitting terminal;
In this step, the RRC state is changed, which includes but not limited to any of the following:
   1) Changing from an OOC state to an RRC_IDLE state;
   2) Changing from an RRC_IDLE or RRC INACTIVE state to an RRC _CONNECTED state;
   3) Changing from the RRC_CONNECTED state to the RRC_IDLE or RRC INACTIVE state.
S2: If the RRC state of the Uu interface of the sidelink transmitting terminal is changed, the sidelink transmitting terminal requests new SLRB configuration information from an SLRB configuration information management function node (that is, the first network device serving the sidelink transmitting terminal, such as the base station) or the protocol layer of the sidelink transmitting terminal responsible for the management of SLRB configuration information;
It should be noted that if the changed RRC state is the RRC_CONNECTED state, the SLRB configuration information management function node refers to the serving base station, the serving distributed unit DU, or the serving centralized unit CU;
If the changed RRC state is the RRC_IDLE or RRC _INACTIVE state, the protocol layer responsible for the management of the SLRB configuration information refers to the RRC layer of the sidelink transmitting terminal;
If the changed RRC state is the OOC state, the protocol layer responsible for the management of the SLRB configuration information refers to the RRC layer of the sidelink transmitting terminal or other protocol layers that store pre-configuration information.
S3: when the sidelink transmitting terminal receives the new SLRB configuration information, it transmits indication information to the sidelink receiving terminal;
Specifically, the indication information includes a first type of indication information used to release the currently established SLRB or release the currently established SLRB and establish a new SLRB, or the second type of indication information used to indicate SLRB remapping of the sidelink interface.

Optionally, the first type of indication information may be but not limited to one of the following:
An RRC signaling of the sidelink interface, for example, PC5-RRC reconfiguration message;
a MAC CE of the sidelink interface;
a physical layer signaling of the sidelink interfaces;
a PDU of the sidelink interface, wherein the PDU is a data PDU or a control PDU, and the PDU is used to instruct the sidelink receiving terminal to release the SLRB that has been established by the current sidelink interface.

Optionally, the RRC signaling of the sidelink interface carries at least one of the following information:
A full configuration identifier of the sidelink interface;
An identifier of the sidelink transmitting terminal;
An identifier of the sidelink receiving terminal;
a radio bearer identifier or a logical channel identifier corresponding to an SLRB to be released between the sidelink transmitting terminal and the sidelink receiving terminal;
SLRB configuration information of an SLRB to be established between the sidelink transmitting terminal and the sidelink receiving terminal.

Optionally, a payload of the MAC CE of the sidelink interface is empty, or the payload of the MAC CE includes at least one of the following information:
the identifier of the sidelink transmitting terminal;
the identifier of the sidelink receiving terminal;
a radio bearer identifier or a logical channel identifier corresponding to an SLRB to be released between the sidelink transmitting terminal and the sidelink receiving terminal; wherein, the radio bearer identifier or the logical channel identifier corresponding to the SLRB is a complete identifier or is an identifier indicated by a bitmap in an ascending or descending order of identifier numbers.

It should be noted that a MAC sub-header corresponding to the MAC CE includes a logical channel identifier, and the logical channel identifier is used to identify that the MAC CE is used for SLRB release.

Optionally, the physical layer signaling of the sidelink interface includes at least one of the following information:
1 bit indication information, configured to indicate to release all SLRBs of the current sidelink interface;
the identifier of the sidelink transmitting terminal;
the identifier of the sidelink receiving terminal;
the radio bearer identifier or the logical channel identifier corresponding to the SLRB to be released between the sidelink transmitting terminal and the sidelink receiving terminal.

Optionally, the second type of indication information includes at least one of the following:
RRC signaling of the sidelink interface;
PDU of the sidelink interface, the PDU is a data PDU or a control PDU, and the PDU is used to indicate that the sidelink transmitting terminal has performed SLRB remapping.

Further, the content of the RRC signaling of the sidelink interface includes at least one of the following:
SLRB configuration information before the state of the sidelink transmitting terminal is changed;
SLRB configuration information after the state of the sidelink transmitting terminal is changed.

S4: After receiving the indication information, the sidelink receiving terminal releases the SLRB that has been established by the current sidelink interface, or performs an operation corresponding to the SLRB remapping of the sidelink interface of the sidelink transmitting terminal.

It should be noted that the indication information is the indication information in the foregoing step S3, and details are not repeated here.

Here, if the sidelink receiving terminal receives the first type of indication information, it releases the SLRB that has been established by the current sidelink interface;
Optionally, when the first type of indication information includes the identification information for releasing the SLRB and the SLRB configuration information for establishing the SLRB, the sidelink receiving terminal performs the SLRB release, and then performs the SLRB establishment.

When the first type of indication information only includes the identification information for releasing the SLRB, only the SLRB release is performed.

If the sidelink receiving terminal receives the second type of indication information, an operation corresponding to the SLRB remapping of the sidelink interface of the sidelink transmitting terminal is performed.

Optionally, after receiving the indication information, the sidelink receiving terminal performs the operation corresponding to the SLRB remapping of the sidelink interface of the sidelink transmitting terminal, which may specifically include:
For multicast, broadcast or unicast of the sidelink interface, performing the operation corresponding to the SLRB remapping of the sidelink interface of the sidelink transmitting terminal includes at least one of the following:
After receiving the second type of indication information, releasing the SLRB corresponding to the sidelink interface;

When the End Marker Control PDU of an SDAP layer corresponding to the SLRB is received, releasing SLRB corresponding to the End Marker Control PDU.

Further, after releasing the SLRB corresponding to the sidelink interface or releasing the SLRB corresponding to the End Marker Control PDU, performing the operation corresponding to the SLRB remapping of the sidelink interface of the sidelink transmitting terminal can also include at least one of the following:
When receiving a first data packet corresponding to a new combination of a source address, a destination address and LCID, establishing the corresponding SLRB and the corresponding SDAP, PDCP and RLC entities;
When receiving a first data packet corresponding to a new combination of a source address, a destination address, a transmission type and LCID, establishing the corresponding SLRB and the corresponding SDAP, PDCP and RLC entities;
It should be noted that, for unicast of the sidelink interface, in addition to the above operations, the performing the operation corresponding to the SLRB remapping of the sidelink interface of the sidelink transmitting terminal also include at least one of the following:
   Performing SLRB reconfiguration according to the second type of indication information;
   According to the second type of indication information, after receiving the End Marker Control PDU corresponding to the SLRB, performing SLRB reconfiguration.

Of course, subsequent versions are not excluded, and the above-mentioned operation for unticast can also be used for the sidelink interface whose transmission type is broadcast or multicast.

S5: The sidelink receiving terminal transmits a response message to the sidelink transmitting terminal.

Here, optionally, after receiving the new SLRB configuration information (i.e., step S2), the sidelink transmitting terminal may release the SLRB that has been established by the current sidelink interface, or, according to the new SLRB configuration information after the state is changed, perform SLRB remapping of the sidelink interface, or establish a new SLRB according to the new SLRB configuration information after the state is changed.

The sidelink transmitting terminal may also release the SLRB established by the current sidelink interface after receiving the response message sent by the sidelink receiving terminal, or perform the SLRB remapping of the sidelink interface according to the new SLRB configuration information after the state is changed, or establish a new SLRB according to the new SLRB configuration information after the state is changed.

Finally, the sidelink transmitting terminal can use the new SLRB configuration to communicate with the sidelink receiving terminal through the sidelink interface.

### Example 2

For the situation that the sidelink transmitting terminal in the RRC_IDLE state performs cell reselection, the sidelink bearer configuration change method in this embodiment may specifically include:
S 11: the sidelink transmitting terminal determines whether cell reselection occurs;
It should be noted that when a User Equipment (UE) in the RRC_IDLE state moves and a cell reselection condition is met, the cell reselection will be performed on the Uu interface, specifically from one cell to another cell.

S12: If the sidelink transmitting terminal performs the cell reselection, the sidelink transmitting terminal requests new SLRB configuration information from the protocol layer of the sidelink transmitting terminal after the reselection responsible for the management of the SLRB configuration information.

Here, for the UE in the RRC_IDLE state, the protocol layer responsible for the management of the SLRB configuration information is the RRC layer of the UE.

It should be noted that, after cell reselection, the UE in the RRC_IDLE state will obtain a new sidelink dedicated SIB from a new serving cell and store the same in the RRC layer thereof.

Here, the new sidelink dedicated SIB includes new SLRB configuration information configured by the network.

S13: When the sidelink transmitting terminal receives the new SLRB configuration information, it transmits indication information to the sidelink receiving terminal;
The indication information in this step is the same as the indication information described in Example 1. The details thereof may refer to Example 1, which will not be repeated here.

S14: After receiving the indication information, the sidelink receiving terminal releases the SLRB that has been established by the current sidelink interface, or performs an operation corresponding to the SLRB remapping of the sidelink interface of the sidelink transmitting terminal.

It should be noted that the indication information is the indication information in the step S13, and details are not repeated here.

The detailed implementation process of this step refers to step S4 in the above-mentioned Example 1, which will not be repeated here.

S15: The sidelink receiving terminal transmits a response message to the sidelink transmitting terminal.

Here, optionally, after receiving the new SLRB configuration information (i.e., step S12), the sidelink transmitting terminal may release the SLRB that has been established by the current sidelink interface, or, according to the new SLRB configuration information after the state is changed, the SLRB remapping of the sidelink interface is performed, or a new SLRB is established according to the new SLRB configuration information after the state is changed.

The sidelink transmitting terminal may also release the SLRB established by the current sidelink interface after receiving the response message sent by the sidelink receiving terminal, or performs the SLRB remapping of the sidelink interface according to the new SLRB configuration information after the state is changed, or the new SLRB is established according to the new SLRB configuration information after the state is changed.

Finally, the sidelink transmitting terminal can use the new SLRB configuration to communicate with the sidelink receiving terminal through the sidelink interface.

### Example 3

For the situation that the sidelink transmitting terminal in the RRC_CONNECTED state performs cell handover, the sidelink bearer configuration change method in this embodiment may specifically include:
S111: The sidelink transmitting terminal determines whether cell handover occurs;
It should be noted that the UE in the RRC_CONNECTED state moves and a cell handover condition is met, the cell handover will be performed on the Uu interface, specifically, handover from one cell to another cell.

S112: If the sidelink transmitting terminal performs the cell handover, the sidelink transmitting terminal requests new SLRB configuration information from the network device serving the sidelink transmitting terminal after the handover.

Here, for the UE in the RRC_CONNECTED state, the network device after the handover is the serving base station of the UE.

It should be noted that, after the cell handover, the UE in the RRC _CONNECTED state will obtain new SLRB configuration information from the new serving cell through dedicated signaling, and store the same in the RRC layer of the UE.

S113: When the sidelink transmitting terminal receives the new SLRB configuration information, it transmits indication information to the sidelink receiving terminal;
The indication information in this step is the same as the indication information described in Example 1, which will not be repeated here.

S114: After receiving the indication information, the sidelink receiving terminal releases the SLRB that has been established by the current sidelink interface, or performs an operation corresponding to the SLRB remapping of the sidelink interface of the sidelink transmitting terminal.

It should be noted that the indication information is the indication information in the above step S113, and details are not repeated here.

For the detailed implementation process of this step, reference may be made to step S4 in the above-mentioned Example 1, which will not be repeated here.

S 115: The sidelink receiving terminal transmits a response message to the sidelink transmitting terminal.

Here, optionally, after receiving the new SLRB configuration information (that is, step S112), the sidelink transmitting terminal may release the SLRB that has been established by the current sidelink interface, or, perform SLRB remapping of the sidelink interface according to the new SLRB configuration information after the state is changed, or establish a new SLRB according to the new SLRB configuration information after the state is changed.

The sidelink transmitting terminal may also release the SLRB established by the current sidelink interface after receiving the response message sent by the sidelink receiving terminal, or perform the SLRB remapping of the sidelink interface according to the new SLRB configuration information after the state is changed, or establish a new SLRB according to the new SLRB configuration information after the state is changed.

Finally, the sidelink transmitting terminal can use the new SLRB configuration to communicate with the sidelink receiving terminal through the sidelink interface.

### Example 4

For the situation where the RRC state of the sidelink receiving terminal is changed, the sidelink interface bearer configuration change method in this embodiment may specifically include:
If the RRC state of the sidelink transmitting terminal does not change, and only the RRC state of the sidelink receiving terminal is changed, the SLRB configuration information after the state of the sidelink receiving terminal is changed is received from the network device serving the sidelink receiving terminal or from the protocol layer responsible for the management of the SLRB configuration information of the sidelink receiving terminal.
Here, if the changed RRC state of the sidelink receiving terminal is the RRC _CONNECTED state, the network device serving the sidelink receiving terminal refers to the base station;
If the changed RRC state of the sidelink receiving terminal is RRC_IDLE/RRC_INACTIVE, then the protocol layer responsible for the management of the SLRB configuration information of the sidelink receiving terminal is the RRC layer of the sidelink receiving terminal;
If the changed RRC state of the sidelink receiving terminal is OOC, the protocol layer responsible for the management of the SLRB configuration information of the sidelink receiving terminal refers to the RRC layer of the sidelink receiving terminal or other protocol layers that store pre-configuration information.

In this embodiment, after the state of the sidelink receiving terminal is changed, the bearer configuration of the sidelink interface can be updated in time by obtaining new SLRB configuration information.

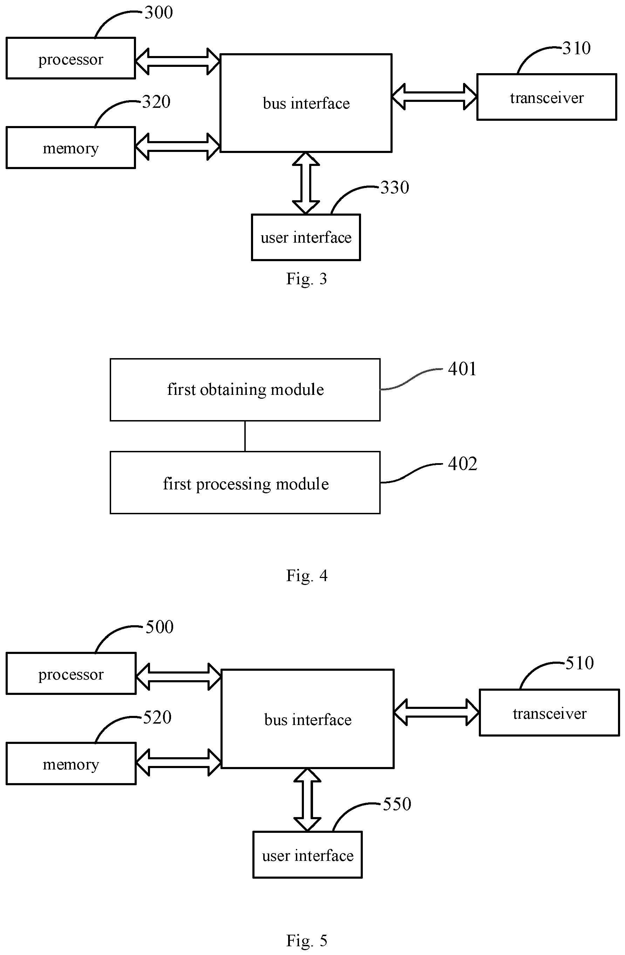

As shown in FIG. 3, an embodiment of the present disclosure further provides a terminal, the terminal includes: a memory 320, a processor 300, a transceiver 310, a bus interface, and a program stored in the memory 320 and executed by the processor 300, the processor 300 is used to read the program in the memory 320, and execute the following process:
When a state of the first terminal is changed, obtaining sidelink radio bearer (SLRB) configuration information after the state of the first terminal is changed from a first network device serving the first terminal or from a protocol layer responsible for management of the SLRB configuration information of the first terminal;
Releasing an SLRB established by a current sidelink interface, or performing SLRB remapping of the sidelink interface according to the SLRB configuration information after the state of the first terminal is changed.

In FIG. 3, the bus architecture may include any number of interconnected buses and bridges, specifically various circuits of one or more processors represented by processor 300 and memory represented by memory 320 are linked together. The bus architecture may also link various other circuits together, such as peripherals, voltage regulators, and power management circuits, which are well known in the art and, therefore, will not be described further herein. The bus interface provides the interface. Transceivers 310 may be a number of elements, including a transmitter and a receiver, units for communicating with various other devices over a transmission medium. For different UEs, the user interface 330 may also be an interface capable of connecting the required equipment externally or internally, and the connected equipment includes but is not limited to a keypad, a display, a speaker, a microphone, a joystick, and the like.

The processor 300 is responsible for managing the bus architecture and general processing, and the memory 320 may store data used by the processor 300 in performing operations.

Optionally, the processor 300 is further configured to:
When the state of the first terminal is changed, transmit request information to the first network device serving the first terminal or to the protocol layer responsible for the management of the SLRB configuration information of the first terminal, and request to obtain the SLRB configuration information after the state of the first terminal is changed.

Optionally, the processor 300 is further configured to:
when the state of the first terminal is changed to an RRC_CONNECTED state, obtaining the SLRB configuration information after the state of the first terminal is changed from the first network device serving the first terminal through an RRC dedicated signaling; or,
when the state of the first terminal is changed to an RRC_IDLE state or an RRC_INACTIVE state, obtaining the SLRB configuration information after the state of the first terminal is changed from the first network device serving the first terminal through a system information block (SIB); or,
when the state of the first terminal is changed to an Out Of Coverage (OOC) state, obtaining the SLRB configuration information after the state of the first terminal is changed from the protocol layer responsible for the management of the SLRB configuration information of the first terminal through inter-layer interaction.

Optionally, the state of the first terminal is changed, including one of the following:
Changing from OOC state to RRC_IDLE state or RRC_INACTIVE state;
Changing from RRC_IDLE state or RRC_INACTIVE state to RRC_CONNECTED state;
Changing from RRC_CONNECTED state to RRC_IDLE state or RRC_INACTIVE state;
Reselecting a first terminal in the RRC_IDLE state from one cell to another cell;
Handing over a first terminal in the RRC_CONNECTED state from one cell to another cell.

Optionally, the processor 300 is further configured to:
After obtaining the SLRB configuration information after the state of the first terminal is changed, release the SLRB that has been established by the current sidelink interface, or, perform SLRB remapping of the sidelink interface according to the SLRB configuration information after the state of the first terminal is changed.

Optionally, the transceiver 310 is configured to:
Transmit indication information to a second terminal, wherein the second terminal is a communication terminal that forms a sidelink with the first terminal, and the indication information includes: a first type of indication information for releasing the currently established SLRB or releasing the currently established SLRB and establishing a new SLRB, or a second type of indication information for indicating SLRB remapping of the sidelink interface.

Optionally, the first type of indication information includes one of the following:
An RRC signaling of the sidelink interface;
a media access control control unit (MAC CE) of the sidelink interface;
a physical layer signaling of the sidelink interfaces;
a protocol data unit (PDU) of the sidelink interface, wherein the PDU is a data PDU or a control PDU, and the PDU is used to instruct the second terminal to release the SLRB that has been established by the current sidelink interface.

Optionally, the RRC signaling of the sidelink interface carries at least one of the following information:
A full configuration identifier of the sidelink interface;
An identifier of the first terminal;
An identifier of the second terminal;
a radio bearer identifier or a logical channel identifier corresponding to an SLRB to be released between the first terminal and the second terminal;
SLRB configuration information of an SLRB to be established between the first terminal and the second terminal.

Optionally, a payload of the MAC CE of the sidelink interface is empty, or the payload of the MAC CE includes at least one of the following information:
the identifier of the first terminal;
the identifier of the second terminal;
a radio bearer identifier or a logical channel identifier corresponding to an SLRB to be released between the first terminal and the second terminal; wherein, the radio bearer identifier or the logical channel identifier corresponding to the SLRB is a complete identifier or is an identifier indicated by a bitmap in an ascending or descending order of identifier numbers.

Optionally, the MAC sub-header corresponding to the MAC CE includes a logical channel identifier, and the logical channel identifier is used to identify that the MAC CE is a MAC CE used for SLRB release.

Optionally, the physical layer signaling of the sidelink interface includes at least one of the following information:
1 bit indication information, configured to indicate to release all SLRBs of the current sidelink interface;
the identifier of the first terminal;
the identifier of the second terminal;
the radio bearer identifier or the logical channel identifier corresponding to the SLRB to be released between the first terminal and the second terminal.

Optionally, the second type of indication information includes at least one of the following:
RRC signaling of the sidelink interface;
PDU of the sidelink interface, the PDU is a data PDU or a control PDU, and the PDU is used to indicate that the first terminal has performed SLRB remapping.

Further, the content of the RRC signaling of the sidelink interface includes at least one of the following:
SLRB configuration information before the state of the first terminal is changed;
SLRB configuration information after the state of the first terminal is changed.

Optionally, the transceiver 310 is also used for:
Receiving a response message sent by the second terminal.

Optionally, the processor 300 is further configured to:
After receiving the response message sent by the second terminal, releasing the SLRB established by the current sidelink interface, or performing the SLRB remapping of the sidelink interface according to the SLRB configuration information after the state of the first terminal is changed.

Optionally, the processor 300 is further configured to:
Establishing a target SLRB according to the SLRB configuration information.

Optionally, the first network-side device is a serving base station, a serving distributed unit DU, or a serving centralized unit CU of the first terminal;
The protocol layer responsible for the management of the SLRB configuration information of the first terminal is the RRC layer or other protocol layers that store the SLRB configuration information.

An embodiment of the present disclosure also provides a terminal, which is a first terminal. Since the principle of the first terminal for solving problems is similar to the sidelink interface bearer change method configuration in the embodiment of the present disclosure, the implementation of the terminal can refer to the implementation of the method, and the repetition will not be described. According to the terminal of the embodiment of the present disclosure, when the state of the first terminal is changed, the SLRB configuration information after the state of the first terminal is changed is obtained from the first network device serving the first terminal or the protocol layer responsible for the management of the SLRB configuration information; the SLRB that has been established by the current sidelink interface is released, or, according to the SLRB configuration information after the state of the first terminal is changed, the SLRB remapping of the sidelink interface is performed, so that when the state of the terminal is changed, the currently established SLRB can be effectively processed, and the sidelink interface bearer configuration can be updated in time.

It should be noted that the terminal provided by the embodiment of the present disclosure is the first terminal capable of executing the above-mentioned sidelink interface bearer configuration change method, and all the embodiments of the method corresponding to the first terminal are applicable to the terminal, and can achieve the same or similar beneficial effects.

As shown in FIG. 4, an embodiment of the present disclosure further provides a terminal, the terminal is a first terminal, and the first terminal is a sidelink interface transmitting terminal, including:
a first obtaining module 401, is configured to, when a state of the first terminal is changed, obtain sidelink radio bearer (SLRB) configuration information after the state of the first terminal is changed from a first network device serving the first terminal or from a protocol layer responsible for management of the SLRB configuration information of the first terminal;
a first processing module 402, configured to release an SLRB established by a current sidelink interface, or perform SLRB remapping of the sidelink interface according to the SLRB configuration information after the state of the first terminal is changed.

In the terminal in this embodiment of the present disclosure, the first obtaining module 401 may include:
a first obtaining unit, configured to, when the state of the first terminal is changed, transmit request information to the first network device serving the first terminal or to the protocol layer responsible for the management of the SLRB configuration information of the first terminal, and request to obtain the SLRB configuration information after the state of the first terminal is changed.

In the terminal in this embodiment of the present disclosure, the first obtaining module 401 may include:
a second obtaining unit, configured to, when the state of the first terminal is changed to an RRC_CONNECTED state, obtain the SLRB configuration information after the state of the first terminal is changed from the first network device serving the first terminal through an RRC dedicated signaling;
a third obtaining unit, configured to, when the state of the first terminal is changed to an RRC_IDLE state or an RRC _INACTIVE state, obtain the SLRB configuration information after the state of the first terminal is changed from the first network device serving the first terminal through a system information block (SIB);
a fourth obtaining unit, configured to acquire, when the state of the first terminal is changed to an Out Of Coverage (OOC) state, obtain the SLRB configuration information after the state of the first terminal is changed from the protocol layer responsible for the management of the SLRB configuration information of the first terminal through inter-layer interaction.

Optionally, the state of the first terminal is changed, including one of the following:
Changing from OOC state to RRC_IDLE state or RRC _INACTIVE state;
Changing from RRC_IDLE state or RRC_INACTIVE state to RRC_CONNECTED state;
Changing from RRC_CONNECTED state to RRC_IDLE state or RRC_INACTIVE state;
Reselecting a first terminal in the RRC_IDLE state from one cell to another cell;
Handing over a first terminal in the RRC_CONNECTED state from one cell to another cell.

In the terminal of this embodiment of the present disclosure, the first processing module 402 may include:
A first processing unit, configured to, after obtaining the SLRB configuration information after the state of the first terminal is changed, release the SLRB that has been established by the current sidelink interface, or, perform SLRB remapping of the sidelink interface according to the SLRB configuration information after the state of the first terminal is changed.

The terminal in the embodiment of the present disclosure further include:
a first transmitting module, configured to, transmit indication information to a second terminal, wherein the second terminal is a communication terminal that forms a sidelink with the first terminal, and the indication information includes: a first type of indication information for releasing the currently established SLRB or releasing the currently established SLRB and establishing a new SLRB, or a second type of indication information for indicating SLRB remapping of the sidelink interface.

Optionally, the first type of indication information includes one of the following:
An RRC signaling of the sidelink interface;
a media access control control unit (MAC CE) of the sidelink interface;
a physical layer signaling of the sidelink interfaces;
a protocol data unit (PDU) of the sidelink interface, wherein the PDU is a data PDU or a control PDU, and the PDU is used to instruct the second terminal to release the SLRB that has been established by the current sidelink interface.

Optionally, the RRC signaling of the sidelink interface carries at least one of the following information:
A full configuration identifier of the sidelink interface;
An identifier of the first terminal;
An identifier of the second terminal;
a radio bearer identifier or a logical channel identifier corresponding to an SLRB to be released between the first terminal and the second terminal;
SLRB configuration information of an SLRB to be established between the first terminal and the second terminal.

Optionally, a payload of the MAC CE of the sidelink interface is empty, or the payload of the MAC CE includes at least one of the following information:
the identifier of the first terminal;
the identifier of the second terminal;
a radio bearer identifier or a logical channel identifier corresponding to an SLRB to be released between the first terminal and the second terminal; wherein, the radio bearer identifier or the logical channel identifier corresponding to the SLRB is a complete identifier or is an identifier indicated by a bitmap in an ascending or descending order of identifier numbers.

Optionally, the MAC sub-header corresponding to the MAC CE includes a logical channel identifier, and the logical channel identifier is used to identify that the MAC CE is a MAC CE used for SLRB release.

Optionally, the physical layer signaling of the sidelink interface includes at least one of the following information:
1 bit indication information, configured to indicate to release all SLRBs of the current sidelink interface;
the identifier of the first terminal;
the identifier of the second terminal;
the radio bearer identifier or the logical channel identifier corresponding to the SLRB to be released between the first terminal and the second terminal.

Optionally, the second type of indication information includes at least one of the following:
RRC signaling of the sidelink interface;
PDU of the sidelink interface, the PDU is a data PDU or a control PDU, and the PDU is used to indicate that the first terminal has performed SLRB remapping.

Further, the content of the RRC signaling of the sidelink interface includes at least one of the following:
SLRB configuration information before the state of the first terminal is changed;
SLRB configuration information after the state of the first terminal is changed.

The terminal in the embodiment of the present disclosure may further include:
A second transmitting module, configured to receive a response message sent by the second terminal.

In the terminal in this embodiment of the present disclosure, the first processing module 402 may include:
a second processing unit, configured to, after receiving the response message sent by the second terminal, release the SLRB established by the current sidelink interface, or perform the SLRB remapping of the sidelink interface according to the SLRB configuration information after the state of the first terminal is changed.

The terminal in the embodiment of the present disclosure may further include:
a first establishing module, configured to establish a target SLRB according to the SLRB configuration information.

Optionally, the first network device is a serving base station, a serving distributed unit DU or a serving centralized unit CU of the first terminal;
The protocol layer responsible for the management of the SLRB configuration information of the first terminal is the RRC layer or other protocol layers that store the SLRB configuration information.

An embodiment of the present disclosure also provides a terminal, which is a first terminal. Since the principle of the first terminal for solving problems is similar to the sidelink interface bearer configuration change method in the embodiment of the present disclosure, the implementation of the terminal can refer to the method, and the repetition will not be described.

According to the embodiment of the present disclosure, when the state of the first terminal is changed, the SLRB configuration information after the state of the first terminal is changed is obtained from the first network device serving the first terminal or the protocol layer responsible for the management of the SLRB configuration information; the SLRB that has been established by the current sidelink interface is released, or, according to the SLRB configuration information after the state of the first terminal is changed, the SLRB remapping of the sidelink interface is performed, so that when the state of the terminal is changed, the currently established SLRB can be effectively processed, and the sidelink interface bearer configuration can be updated in time.

It should be noted that the terminal provided by the embodiment of the present disclosure is the first terminal capable of executing the above-mentioned sidelink interface bearer configuration change method, and all the embodiments of the method corresponding to the first terminal are applicable to the terminal, and can achieve the same or similar beneficial effects.

In some embodiments of the present disclosure, a computer-readable storage medium is also provided, on which a computer program is stored, and when the program is executed by a processor, the following steps are implemented:
When a state of the first terminal is changed, obtaining sidelink radio bearer (SLRB) configuration information after the state of the first terminal is changed from a first network device serving the first terminal or from a protocol layer responsible for management of the SLRB configuration information of the first terminal;
Releasing an SLRB established by a current sidelink interface, or performing SLRB remapping of the sidelink interface according to the SLRB configuration information after the state of the first terminal is changed.

When the program is executed by the processor, all the implementation in the foregoing method embodiment applied to the terminal as shown in FIG. 1 can be implemented. In order to avoid repetition, details are not repeated here.

As shown in FIG. 5, an embodiment of the present disclosure further provides a terminal, the terminal includes a memory 520, a processor 500, a transceiver 510, a bus interface, and a program stored in the memory 520 and executed by the processor 500, the processor 500 is used to read the program in the memory 520, and execute the following process:
Receiving indication information sent by a first terminal; and releasing the SLRB that has been established by a current sidelink interface according to the indication information, or performing an operation corresponding to SLRB remapping of the sidelink interface of the first terminal; or
When a state of the second terminal is changed, obtaining sidelink radio bearer (SLRB) configuration information after the state of the second terminal is changed from a second network device serving the second terminal or from a protocol layer responsible for management of the SLRB configuration information of the second terminal.

In FIG. 5, the bus architecture may include any number of interconnected buses and bridges, specifically various circuits of one or more processors represented by processor 500 and memory represented by memory 520 are linked together. The bus architecture may also link various other circuits together, such as peripherals, voltage regulators, and power management circuits, which are well known in the art and, therefore, will not be described further herein. The bus interface provides the interface. Transceiver 510 may be a number of elements, including a transmitter and a receiver, units for communicating with various other devices over a transmission medium. For different UEs, the user interface 530 may also be an interface capable of externally or internally connecting the required equipment, and the connected equipment includes but is not limited to a keypad, a display, a speaker, a microphone, a joystick, and the like.

Optionally, the indication information includes the first type of indication information used to release the currently established SLRB or release the currently established SLRB and establish a new SLRB, or the second type of indication information used to indicate SLRB remapping of the sidelink interface; the processor 500 is further configured to:
release the SLRB that has been established by the current sidelink interface according to the first type of indication information,; or,
perform the operation corresponding to the SLRB remapping of the sidelink interface of the first terminal according to the second type of indication information.

Optionally, the first type of indication information includes one of the following:
An RRC signaling of the sidelink interface;
a media access control control unit (MAC CE) of the sidelink interface;
a physical layer signaling of the sidelink interfaces;
a protocol data unit (PDU) of the sidelink interface, wherein the PDU is a data PDU or a control PDU, and the PDU is used to instruct the second terminal to release the SLRB that has been established by the current sidelink interface.

Optionally, the RRC signaling of the sidelink interface carries at least one of the following information:
A full configuration identifier of the sidelink interface;
An identifier of the first terminal;
An identifier of the second terminal;
a radio bearer identifier or a logical channel identifier corresponding to an SLRB to be released between the first terminal and the second terminal;
SLRB configuration information of an SLRB to be established between the first terminal and the second terminal.

Optionally, a payload of the MAC CE of the sidelink interface is empty, or the payload of the MAC CE includes at least one of the following information:
the identifier of the first terminal;
the identifier of the second terminal;
a radio bearer identifier or a logical channel identifier corresponding to an SLRB to be released between the first terminal and the second terminal; wherein, the radio bearer identifier or the logical channel identifier corresponding to the SLRB is a complete identifier or is an identifier indicated by a bitmap in an ascending or descending order of identifier numbers.

Optionally, a MAC sub-header corresponding to the MAC CE includes a logical channel identifier, and the logical channel identifier is used to identify that the MAC CE is used for SLRB release.

Optionally, the physical layer signaling of the sidelink interface includes at least one of the following information:
1 bit indication information, configured to indicate to release all SLRBs of the current sidelink interface;
the identifier of the first terminal;
the identifier of the second terminal;
the radio bearer identifier or the logical channel identifier corresponding to the SLRB to be released between the first terminal and the second terminal.

Optionally, the second type of indication information includes at least one of the following:
RRC signaling of the sidelink interface;
PDU of the sidelink interface, the PDU is a data PDU or a control PDU, and the PDU is used to indicate that the first terminal has performed SLRB remapping.

Further, the content of the RRC signaling of the sidelink interface includes at least one of the following:
SLRB configuration information before the state of the first terminal is changed;
SLRB configuration information after the state of the first terminal is changed.

Optionally, the indication information is the first type of indication information, and the processor 500 is further configured to:
Release the SLRB that has been established by the current sidelink interface according to the first type of indication information;
When the first type of indication information includes establishing SLRB configuration information of an SLRB, establish the SLRB according to the SLRB configuration information.

Optionally, the processor 500 is further configured to:
release the SLRB corresponding to the sidelink interface after receiving the second type of indication information;
When an End Marker Control PDU of a service data adaptation protocol layer corresponding to the SLRB is received, release the SLRB corresponding to the End Marker Control PDU.

Optionally, the processor 500 is further configured to:
When receiving a first data packet corresponding to a combination of a source address, a destination address and a logical channel identifier, establish a corresponding SLRB and corresponding service data adaptation protocol (SDAP), packet data convergence protocol (PDCP) and radio link control (RLC) entities;
When receiving the first data packet corresponding to a combination of the source address, the destination address, a transmission type and the logical channel identifier, establish the corresponding SLRB and the corresponding SDAP, PDCP and RLC entities.

In an embodiment, the processor 500 is further configured to:
perform SLRB reconfiguration according to the second type of indication information;
after receiving the End Marker Control PDU corresponding to the SLRB, perform the SLRB reconfiguration according to the second type of indication information.

Optionally, the transceiver 510 is used for:
Transmitting a response message to the first terminal.

Optionally, the second network device is a serving base station, a serving distributed unit DU or a serving centralized unit CU of the second terminal;
The protocol layer responsible for the management of the SLRB configuration information of the sidelink interface of the second terminal is the RRC layer or other protocol layers that store the SLRB configuration information.

An embodiment of the present disclosure also provides a terminal, which is a second terminal. Since the principle of the second terminal for solving problems is similar to the sidelink interface bearer configuration change method in the embodiment of the present disclosure, the implementation of the terminal can refer to the method, and the repetition will not be described.

The terminal in the embodiment of the present disclosure receives the indication information sent by the first terminal; according to the indication information, the SLRB established by the current sidelink interface is released, or the operation corresponding to the SLRB remapping of the sidelink interface of the first terminal, so that when the state of the terminal is changed, the currently established SLRB can be effectively processed, and the sidelink interface bearer configuration can be updated in time.

It should be noted that, the terminal provided by the embodiment of the present disclosure is a second terminal capable of executing the above-mentioned sidelink interface bearer configuration change method, and all the above-mentioned embodiments of the method corresponding to the second terminal side are applicable to the terminal, and can achieve the same or similar beneficial effects.

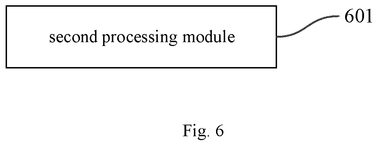

As shown in FIG. 6, the implementation of the present disclosure further provides a terminal, where the terminal is a second terminal, and the second terminal is a sidelink interface receiving terminal, including:
a second processing module 601, configured to receive indication information sent by a first terminal; release the SLRB that has been established by a current sidelink interface according to the indication information, or performing an operation corresponding to SLRB remapping of the sidelink interface of the first terminal; or,
a second obtaining module, configured to, when a state of the second terminal is changed, obtain sidelink radio bearer (SLRB) configuration information after the state of the second terminal is changed from a second network device serving the second terminal or from a protocol layer responsible for management of the SLRB configuration information of the second terminal.

In the terminal in the embodiment of the present disclosure, the indication information includes the first type of indication information for releasing the currently established SLRB or releasing the currently established SLRB and establishing a new SLRB, or the second type of indication information indicating the SLRB remapping of the sidelink interface; the second processing module 601 may include:
a third processing unit, configured to release the SLRB that has been established by the current sidelink interface according to the first type of indication information; or,
A fourth processing unit, configured to perform the operation corresponding to the SLRB remapping of the sidelink interface of the first terminal according to the second type of indication information.

Optionally, the first type of indication information includes one of the following:
An RRC signaling of the sidelink interface;
a media access control control unit (MAC CE) of the sidelink interface;
a physical layer signaling of the sidelink interfaces;
a protocol data unit (PDU) of the sidelink interface, wherein the PDU is a data PDU or a control PDU, and the PDU is used to instruct the second terminal to release the SLRB that has been established by the current sidelink interface.

Optionally, the RRC signaling of the sidelink interface carries at least one of the following information:
A full configuration identifier of the sidelink interface;
An identifier of the first terminal;
An identifier of the second terminal;
a radio bearer identifier or a logical channel identifier corresponding to an SLRB to be released between the first terminal and the second terminal;
SLRB configuration information of an SLRB to be established between the first terminal and the second terminal.

Optionally, a payload of the MAC CE of the sidelink interface is empty, or the payload of the MAC CE includes at least one of the following information:
the identifier of the first terminal;
the identifier of the second terminal;
a radio bearer identifier or a logical channel identifier corresponding to an SLRB to be released between the first terminal and the second terminal; wherein, the radio bearer identifier or the logical channel identifier corresponding to the SLRB is a complete identifier or is an identifier indicated by a bitmap in an ascending or descending order of identifier numbers.

Optionally, a MAC sub-header corresponding to the MAC CE includes a logical channel identifier, and the logical channel identifier is used to identify that the MAC CE is used for SLRB release.

Optionally, the physical layer signaling of the sidelink interface includes at least one of the following information:
1 bit indication information, configured to indicate to release all SLRBs of the current sidelink interface;
the identifier of the first terminal;
the identifier of the second terminal;
the radio bearer identifier or the logical channel identifier corresponding to the SLRB to be released between the first terminal and the second terminal.

Optionally, the second type of indication information includes at least one of the following:
RRC signaling of the sidelink interface;
PDU of the sidelink interface, the PDU is a data PDU or a control PDU, and the PDU is used to indicate that the first terminal has performed SLRB remapping.

Optionally, the content of the RRC signaling of the sidelink interface includes at least one of the following:
SLRB configuration information before the state of the first terminal is changed;
SLRB configuration information after the state of the first terminal is changed.

Optionally, the indication information is the first type of indication information, and the terminal in this embodiment of the present disclosure may further include:
a release module, configured to release the SLRB that has been established by the current sidelink interface according to the first type of indication information;
a second establishing module, configured to, when the first type of indication information includes establishing SLRB configuration information of an SLRB, establish the SLRB according to the SLRB configuration information.

In the terminal in this embodiment of the present disclosure, the second processing module 601 may include:
a first release unit, configured to receive the second type of indication information and release the SLRB corresponding to the sidelink interface;
a second release unit, configured to, when an End Marker Control PDU of a service data adaptation protocol layer corresponding to the SLRB is received, release the SLRB corresponding to the End Marker Control PDU.

In the terminal in this embodiment of the present disclosure, the second processing module 601 may include:
a first establishing unit, configured to, when receiving a first data packet corresponding to a combination of a source address, a destination address and a logical channel identifier, establish a corresponding SLRB and corresponding service data adaptation protocol (SDAP), packet data convergence protocol (PDCP) and radio link control (RLC) entities;
a second establishing unit, configured to, when receiving the first data packet corresponding to a combination of the source address, the destination address, a transmission type and the logical channel identifier, establish the corresponding SLRB and the corresponding SDAP, PDCP and RLC entities.

In the terminal in this embodiment of the present disclosure, the second processing module 601 includes:
a first reconfiguration unit, configured to perform SLRB reconfiguration according to the second type of indication information;
a second reconfiguration unit, configured to, after receiving the End Marker Control PDU corresponding to the SLRB, perform the SLRB reconfiguration according to the second type of indication information.

The terminal in the embodiment of the present disclosure may further include:
a third transmitting module, configured to transmit a response message to the first terminal.

Optionally, the second network device is a serving base station, a serving distributed unit DU or a serving centralized unit CU of the second terminal;
The protocol layer responsible for the management of the SLRB configuration information of the sidelink interface of the second terminal is the RRC layer or other protocol layers that store the SLRB configuration information.

An embodiment of the present disclosure also provides a terminal, which is a second terminal. Since the principle of the second terminal for solving problems is similar to the sidelink interface bearer configuration change method in the embodiment of the present disclosure, the implementation of the terminal can refer to the method, and the repetition will not be described.

The terminal in the embodiment of the present disclosure receives the indication information sent by the first terminal through the second processing module; according to the indication information, releases the SLRB that has been established by the current sidelink interface, or performs the operation corresponding to the SLRB remapping of the sidelink interface of the first terminal, in this way, when the state of the terminal is changed, the currently established SLRB can be effectively processed, and the sidelink interface bearer configuration can be updated in time.

It should be noted that, the terminal provided by the embodiment of the present disclosure is a second terminal capable of executing the above-mentioned sidelink interface bearer configuration change method, and all the above-mentioned embodiments of the method corresponding to the second terminal side are applicable to the terminal, and can achieve the same or similar beneficial effects.

In some embodiments of the present disclosure, a computer-readable storage medium is also provided, on which a computer program is stored, and when the program is executed by a processor, the following steps are implemented:
Receiving indication information sent by a first terminal; and releasing the SLRB that has been established by a current sidelink interface according to the indication information, or performing an operation corresponding to SLRB remapping of the sidelink interface of the first terminal; or
When a state of the second terminal is changed, obtaining sidelink radio bearer (SLRB) configuration information after the state of the second terminal is changed from a second network device serving the second terminal or from a protocol layer responsible for management of the SLRB configuration information of the second terminal.

When the program is executed by the processor, all the implementation in the method embodiment applied to the terminal side as shown in FIG. 2 can be implemented. In order to avoid repetition, details are not repeated here.

Those of ordinary skill in the art can realize that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. Those of ordinary skill in the art may implement the described functionality using different methods for each particular application, but such implementations should not be considered beyond the scope of the present disclosure.

Those skilled in the art can clearly understand that, for the convenience and brevity of description, the specific working process of the above-described systems, devices and units may refer to the corresponding processes in the method embodiments, which will not be repeated here.

In the embodiments provided in this application, it should be understood that the disclosed device and method may be implemented in other manners. For example, the device embodiments described above are only illustrative. For example, the division of the units is only a logical function division. In actual implementation, there may be other division methods. For example, multiple units or components may be combined or integrated into another system, or some features can be ignored, or not implemented. On the other hand, the coupling or direct coupling or communication connection may be through some interfaces, indirect coupling or communication connection of devices or units may be in electrical, mechanical or other forms.

The units described as separate components may or may not be physically separated, and components displayed as units may or may not be physical units, that is, may be located in one place, or may be distributed to multiple network units. Some or all of the units may be selected according to actual needs to achieve the purpose of the solution in this embodiment.

In addition, each functional unit in each embodiment of the present disclosure may be integrated into one processing unit, or each unit may exist physically alone, or two or more units may be integrated into one unit.

The functions, if implemented in the form of software functional units and sold or used as independent products, may be stored in a computer-readable storage medium. Based on this understanding, the technical solutions of the present disclosure may be embodied in the form of software products in essence, or the parts that make contributions to related art. The computer software products are stored in a storage medium and include several instructions for a computer device (which may be a personal computer, a server, or a network device, etc.) to execute all or part of the steps of the methods described in the various embodiments of the present disclosure. The storage medium includes: a U disk, a removable hard disk, a ROM, a RAM, a magnetic disk, or an optical disk and other mediums that can store program codes.

Those of ordinary skill in the art can understand that all or part of the processes in the methods of the above embodiments can be accomplished by controlling the relevant hardware through a computer program, and the program can be stored in a computer-readable storage medium, and when the program is executed, it may include the processes of the embodiments of the above-mentioned methods. The storage medium may be a magnetic disk, an optical disk, a read-only memory (ROM), or a random access memory (RAM) or the like.

It can be understood that the embodiments described in the embodiments of the present disclosure may be implemented by hardware, software, firmware, middleware, microcode, or a combination thereof. For hardware implementation, modules, units and sub-units can be implemented in one or more Application Specific Integrated Circuits (ASIC), Digital Signal Processor (DSP), Digital Signal Processing Device (DSPD), Programmable Logic Device (PLD), Field-Programmable Gate Array (FPGA), general-purpose processor, controller, microcontroller, microprocessor, in other electronic units or combinations thereof.

For software implementation, the techniques described in the embodiments of the present disclosure may be implemented through modules (e.g., procedures, functions, etc.) that perform the functions described in the embodiments of the present disclosure. Software codes may be stored in memory and executed by a processor. The memory can be implemented inside the processor or external to the processor.

## Claims

1. A sidelink interface bearer configuration change method, applied to a first terminal, wherein the first terminal is a sidelink interface transmitting terminal, the method comprises:
when a state of the first terminal is changed, obtaining (101) sidelink radio bearer (SLRB) configuration information after the state of the first terminal is changed from a first network device serving the first terminal or from a protocol layer responsible for management of the SLRB configuration information of the first terminal; performing SLRB remapping of the sidelink interface according to the SLRB configuration information after the state of the first terminal is changed,
wherein the performing SLRB remapping of the sidelink interface comprises:
after sending End Marker Control PDU corresponding to the SLRB, performing SLRB reconfiguration,
wherein after obtaining SLRB configuration information after the state of the first terminal is changed from a first network device serving the first terminal or from a protocol layer responsible for management of the SLRB configuration information of the first terminal, the method further comprises:
transmitting indication information to a second terminal, wherein the second terminal is a communication terminal that forms a sidelink with the first terminal, and the indication information includes: a second type of indication information for indicating SLRB remapping of the sidelink interface.

2. The method according to claim 1, wherein when a state of the first terminal is changed, obtaining (101) SLRB configuration information after the state of the first terminal is changed from a first network device serving the first terminal or from a protocol layer responsible for management of the SLRB configuration information of the first terminal includes:
when the state of the first terminal is changed, transmitting request information to the first network device serving the first terminal or to the protocol layer responsible for the management of the SLRB configuration information of the first terminal, and requesting to obtain the SLRB configuration information after the state of the first terminal is changed.

3. The method according to claim 1, wherein when a state of the first terminal is changed, obtaining (101) SLRB configuration information after the state of the first terminal is changed from a first network device serving the first terminal or from a protocol layer responsible for management of the SLRB configuration information of the first terminal includes:
when the state of the first terminal is changed to a Radio Resource Control CONNECTED (RRC_CONNECTED) state, obtaining the SLRB configuration information after the state of the first terminal is changed from the first network device serving the first terminal through an RRC dedicated signaling; or
when the state of the first terminal is changed to an RRC_IDLE state or an RRC_INACTIVE state, obtaining the SLRB configuration information after the state of the first terminal is changed from the first network device serving the first terminal through a system information block (SIB); or
when the state of the first terminal is changed to an Out Of Coverage (OOC) state, obtaining the SLRB configuration information after the state of the first terminal is changed from the protocol layer responsible for the management of the SLRB configuration information of the first terminal through inter-layer interaction.

4. The method according to claim 1, wherein the state of the first terminal is changed, includes one of the following:
changing from an OOC state to an RRC_IDLE state or an RRC_INACTIVE state;
changing from the RRC_IDLE state or the RRC _INACTIVE state to an RRC _CONNECTED state;
changing from the RRC_CONNECTED state to the RRC_IDLE state or the RRC_INACTIVE state;
reselecting a first terminal in the RRC_IDLE state from one cell to another cell;
handing over a first terminal in the RRC_CONNECTED state from one cell to another cell.

5. The method according to claim 1, wherein performing SLRB remapping of the sidelink interface according to the SLRB configuration information after the state of the first terminal is changed includes:
after obtaining the SLRB configuration information after the state of the first terminal is changed, performing SLRB remapping of the sidelink interface according to the SLRB configuration information after the state of the first terminal is changed.

6. The method according to claim 1, wherein after transmitting the indication information to the second terminal, the method further comprises:
receiving a response message sent by the second terminal,
wherein the performing SLRB remapping of the sidelink interface according to the SLRB configuration information after the state of the first terminal is changed includes:
after receiving the response message sent by the second terminal, performing the SLRB remapping of the sidelink interface according to the SLRB configuration information after the state of the first terminal is changed.

7. The method according to claim 1, wherein the first network device is a serving base station, a serving distributed unit (DU) or a serving centralized unit (CU) of the first terminal;
the protocol layer responsible for the management of the SLRB configuration information of the first terminal is an RRC layer or other protocol layers that store the SLRB configuration information.

8. A sidelink interface bearer configuration change method, applied to a second terminal, whereby the second terminal is a sidelink interface receiving terminal, the method comprises:
receiving (201) indication information sent by a first terminal; and performing an operation corresponding to SLRB remapping of the sidelink interface of the first terminal, wherein the indication information comprises a second type of indication information for indicating SLRB remapping of the sidelink interface;
wherein the performing an operation corresponding to SLRB remapping of the sidelink interface of the first terminal comprises:
after receiving End Marker Control PDU corresponding to the SLRB, performing SLRB reconfiguration according to the second type of indication information.

9. The method according to claim 8, wherein the performing an operation corresponding to SLRB remapping of the sidelink interface of the first terminal comprises at least one of the following:
releasing the SLRB corresponding to the sidelink interface after receiving the second type of indication information;
when an End Marker Control PDU of a service data adaptation protocol layer corresponding to the SLRB is received, releasing the SLRB corresponding to the End Marker Control PDU,
wherein, after releasing the SLRB corresponding to the sidelink interface or releasing the SLRB corresponding to the End Marker Control PDU, the performing an operation corresponding to SLRB remapping of the sidelink interface of the first terminal includes at least one of the following:
when receiving a first data packet corresponding to a combination of a source address, a destination address and a logical channel identifier, establishing a corresponding SLRB and corresponding service data adaptation protocol (SDAP), packet data convergence protocol (PDCP) and radio link control (RLC) entities;
when receiving a first data packet corresponding to a combination of the source address, the destination address, a transmission type and the logical channel identifier, establishing the corresponding SLRB and the corresponding SDAP, PDCP and RLC entities.

10. A terminal, wherein the terminal is a first terminal, and the first terminal is a sidelink interface transmitting terminal, the terminal comprises:
a first obtaining module (401), configured to, when a state of the first terminal is changed, obtain sidelink radio bearer (SLRB) configuration information after the state of the first terminal is changed from a first network device serving the first terminal or from a protocol layer responsible for management of the SLRB configuration information of the first terminal;
a first processing module (402), configured to perform SLRB remapping of the sidelink interface according to the SLRB configuration information after the state of the first terminal is changed,
wherein the first processing module (402) is specifically configured to: after sending End Marker Control PDU corresponding to the SLRB, perform SLRB reconfiguration,
the terminal further comprises:
a first transmitting module, configured to, transmit indication information to a second terminal, wherein the second terminal is a communication terminal that forms a sidelink with the first terminal, and the indication information includes: a second type of indication information for indicating SLRB remapping of the sidelink interface.

11. A terminal, wherein the terminal is a second terminal, and the second terminal is a sidelink interface receiving terminal, the terminal comprises:
a second processing module (601), configured to receive indication information sent by a first terminal; and performing an operation corresponding to SLRB remapping of the sidelink interface of the first terminal, wherein the indication information includes a second type of indication information for indicating SLRB remapping of the sidelink interface;
wherein the second processing module (601) is specifically configured to after receiving End Marker Control PDU corresponding to the SLRB, perform SLRB reconfiguration.

## Patentansprüche

1. Verfahren zum Ändern einer Sidelink-Interface-Trägerkonfiguration, angewendet auf ein erstes Endgerät, wobei das erste Endgerät ein Sidelink-Interface-Übertragungsendgerät ist, wobei das Verfahren die folgenden Schritte aufweist:
wenn ein Zustand des ersten Endgeräts verändert wird, Erhalten (101) von Sidelink-Funkträger(SLRB)-Konfigurationsinformationen nach der Änderung des Zustands des ersten Endgeräts von einer das erste Endgerät bedienenden ersten Netzwerkvorrichtung oder von einer Protokollschicht, die für das Verwalten der SLRB-Konfigurationsinformationen des Endgeräts verantwortlich ist;
Durchführen eines SLRB-Remapping des Sidelink-Interface gemäß den SLRB-Konfigurationsinformationen nach der Änderung des Zustands des ersten Endgeräts,
wobei das Durchführen des SLRB-Remappings des Sidelink-Interface den folgenden Schritt aufweist:
nach dem Senden einer dem SLRB entsprechenden End-Marker-Control-PDU, Durchführen einer SLRB-Rekonfiguration,
wobei das Verfahren nach dem Erhalten von SLRB-Konfigurationsinformationen nach der Änderung des Zustands des ersten Endgeräts von einer das erste Endgerät bedienenden ersten Netzwerkvorrichtung oder von einer Protokollschicht, die für das Verwalten der SLRB-Konfigurationsinformationen des Endgeräts verantwortlich ist, ferner den folgenden Schritt aufweist:
Übertragen von Hinweisinformationen an ein zweites Endgerät, wobei das zweite Endgerät ein Kommunikationsendgerät ist, das einen Sidelink mit dem ersten Endgerät bildet, und die Hinweisinformationen aufweisen: einen zweiten Typ von Hinweisinformationen zum Hinweisen auf das SLRB-Remapping des Sidelink-Interface.

2. Verfahren nach Anspruch 1, bei welchem, wenn ein Zustand des ersten Endgeräts verändert wird, das Erhalten (101) von Sidelink-Funkträger(SLRB)-Konfigurationsinformationen nach der Änderung des Zustands des ersten Endgeräts von einer das erste Endgerät bedienenden ersten Netzwerkvorrichtung oder von einer Protokollschicht, die für das Verwalten der SLRB-Konfigurationsinformationen des Endgeräts verantwortlich ist, aufweist:
wenn der Zustand des ersten Endgeräts verändert wird, Übertragen von Anforderungsinformationen an die das erste Endgerät bedienende erste Netzwerkvorrichtung oder an die Protokollschicht, die für das Verwalten der SLRB-Konfigurationsinformationen des Endgeräts verantwortlich ist, und Anfordern des Erhaltens der SLRB-Konfigurationsinformationen nach dem Ändern des Zustands des ersten Endgeräts.

3. Verfahren nach Anspruch 1, bei welchem, wenn ein Zustand des ersten Endgeräts verändert wird, das Erhalten (101) von Sidelink-Funkträger(SLRB)-Konfigurationsinformationen nach der Änderung des Zustands des ersten Endgeräts von einer das erste Endgerät bedienenden ersten Netzwerkvorrichtung oder von einer Protokollschicht, die für das Verwalten der SLRB-Konfigurationsinformationen des Endgeräts verantwortlich ist, aufweist:
wenn der Zustand des ersten Endgeräts zu einem Radio-Resource-Control-CONNECTED-Zustand (RRC_CONNECTED) geändert wird, Erhalten der SLRB-Konfigurationsinformationen nach der Änderung des Zustands des ersten Endgeräts von der das erste Endgerät bedienenden ersten Netzwerkvorrichtung über eine RRC dedizierte Signalisierung; oder
wenn der Zustand des ersten Endgeräts zu einem RRC-IDLE-Zustand oder einen RRC_INACTIVE-Zustand geändert wird, Erhalten der SLRB-Konfigurationsinformationen nach der Änderung des Zustands des ersten Endgeräts von der das erste Endgerät bedienenden ersten Netzwerkvorrichtung über einen Systeminformationsblock (SIB); oder
wenn der Zustand des ersten Endgeräts zu einem Out-Of-Coverage-Zustand (OOC) geändert wird, Erhalten der SLRB-Konfigurationsinformationen nach der Änderung des Zustands des ersten Endgeräts von der Protokollschicht, die für das Verwalten der SLRB-Konfigurationsinformationen des Endgeräts verantwortlich ist, über Inter-Layer-Interaktion.

4. Verfahren nach Anspruch 1, bei welchem der Zustand des ersten Endgeräts geändert wird, mit einem der folgenden Schritte:
Ändern von einem OOC-Zustand in einen RRC_IDLE-Zustand oder einen RRC_INACTIVE-Zustand;
Ändern von dem RRC_ICLE-Zustand oder dem RRC_INACTIVE-Zustand zu einem RRC_INACTIVE-Zustand;
Ändern von dem RRC_CONNECTED-Zustand zu dem RRC_IDLE-Zustand oder dem RRC_INACTIVE-Zustand;
neues Auswählen eines ersten Endgeräts im RRC_IDLE-Zustand von einer Zelle zu einer anderen Zelle;
Übergeben einer ersten Zelle im RRC_CONNECTED-Zustand von einer Zelle in die nächste Zelle.

5. Verfahren nach Anspruch 1, bei welchem das Durchführen des SLRB-Remappings des Sidelink-Interface gemäß den SLRB-Konfigurationsinformationen nach der Änderung des Zustands des ersten Endgeräts aufweist:
nach dem Erhalten der SLRB-Konfigurationsinformationen nach der Änderung des Zustands des ersten Endgeräts, Durchführen des SLRB-Remappings des Sidelink-Interface gemäß den SLRB-Konfigurationsinformationen nach der Änderung des Zustands des ersten Endgeräts.

6. Verfahren nach Anspruch 1, bei welchem das Verfahren nach dem Übertragen der Hinweisinformationen an das zweite Endgerät ferner den folgenden Schritt aufweist:
Empfangen einer von dem zweiten Endgerät gesendeten Antwortnachricht,
wobei das Durchführen des SLRB-Remappings des Sidelink-Interface gemäß den SLRB-Konfigurationsinformationen nach der Änderung des Zustands des ersten Endgeräts den folgenden Schritt aufweist:
nach dem Empfangen der von dem zweiten Endgerät gesendeten Antwortnachricht, Durchführen des SLRB-Remappings des Sidelink-Interface gemäß den SLRB-Konfigurationsinformationen nach der Änderung des Zustands des ersten Endgeräts.

7. Verfahren nach Anspruch 1, bei welchem die erste Netzwerkvorrichtung eine Serving-Basisstation, eine dezentrale Serving-Einheit (DU) oder eine zentrale Serving-Einheit (CU) des ersten Endgeräts ist;
die Protokollschicht, die für das Verwalten der SLRB-Konfigurationsinformationen des Endgeräts verantwortlich ist, eine RRC-Schicht oder andere Protokollschichten, welche die SLRB-Konfigurationsinformationen speichern, ist.

8. Verfahren zum Ändern einer Sidelink-Interface-Trägerkonfiguration, angewendet auf ein zweites Endgerät, **dadurch gekennzeichnet, dass** das zweite Endgerät ein Sidelink-Interface-Empfangsendgerät ist, wobei das Verfahren aufweist:
Empfangen (201) von von einem ersten Endgerät gesendeten Hinweisinformationen; und Durchführen einer Operation, die einem SLRB-Remapping des Sidelink-Interface des ersten Endgeräts entspricht, wobei die Hinweisinformationen einen zweiten Typ von Hinweisinformationen zum Hinweisen auf das SLRB-Remapping des Sidelink-Interface aufweisen;
wobei das Durchführen einer Operation, die einem SLRB-Remapping des Sidelink-Interface des ersten Endgeräts entspricht, den folgenden Schritt aufweist: nach dem Empfangen einer dem SLRB entsprechenden End-Marker-Control-PDU, Durchführen einer SLRB-Rekonfiguration gemäß dem zweiten Typ von Hinweisinformationen.

9. Verfahren nach Anspruch 8, bei welchem das Durchführen einer Operation, die einem SLRB-Remapping des Sidelink-Interface des ersten Endgeräts entspricht, mindestens eines des Folgenden aufweist:
Freigeben des dem Sidelink-Interface entsprechenden SLRB nach dem Empfang des zweiten Typs von Hinweisinformationen;
wenn eine End-Marker-Control-PDU einer Service-Daten-Anpassungsprotokollschicht, die dem SLRB entspricht, empfangen wird, Freigeben des der End-Marker-Control-PDU entsprechenden SLRB,
wobei nach dem Freigeben des dem Sidelink-Interface entsprechenden SLRB oder dem Freigeben des der End-Marker-Control-PDU entsprechenden SLRB, das Durchführen einer Operation, die einem SLRB-Remapping des Sidelink-Interface des ersten Endgeräts entspricht, mindestens eines des Folgenden aufweist:
beim Empfang eines ersten Datenpakets, das einer Kombination aus einer Quelladresse, einer Zieladresse und einem logischen Kanal-Identifikator entspricht, Erstellen eines entsprechenden SLRB und entsprechender Service-Daten-Anpassungsprotokoll- (SDAP), einer Paketdatenkonvergenzprotokoll-(PDCP) und Radio-Link-Control-Entitäten (RLC);
beim Empfang eines ersten Datenpakets, das einer Kombination aus der Quelladresse, der Zieladresse, einem Übertragungstyp und dem logischen Kanal-Identifikator entspricht, Erstellen des entsprechenden SLRB und der entsprechenden SDAP-, PDCP- und RLC-Entitäten.

10. Endgerät, bei welchem das Endgerät ein erstes Endgerät ist, und das erste Endgerät ein Sidelink-Interface-Übertragungsendgerät ist, wobei das Endgerät aufweist:
ein erstes Erfassungsmodul (401), das dazu ausgebildet ist, wenn ein Zustand des ersten Endgeräts verändert wird, Sidelink-Funkträger(SLRB)-Konfigurationsinformationen nach der Änderung des Zustands des ersten Endgeräts von einer das erste Endgerät bedienenden ersten Netzwerkvorrichtung oder von einer Protokollschicht, die für das Verwalten der SLRB-Konfigurationsinformationen des Endgeräts verantwortlich ist, zu erhalten;
ein erstes Verarbeitungsmodul (402), das dazu ausgebildet ist, ein SLRB-Remapping des Sidelink-Interface gemäß den SLRB-Konfigurationsinformationen nach der Änderung des Zustands des ersten Endgeräts durchzuführen,
wobei das erste Verarbeitungsmodul (402) insbesondere dazu ausgebildet ist, nach dem Senden einer dem SLRB entsprechenden End-Marker-Control-PDU, eine SLRB-Rekonfiguration durchzuführen,
wobei das Endgerät ferner aufweist:
ein erstes Übertragungsmodul, das dazu ausgebildet ist, Hinweisinformationen an ein zweites Endgerät zu übertragen, wobei das zweite Endgerät ein Kommunikationsendgerät ist, das einen Sidelink mit dem ersten Endgerät bildet, und die Hinweisinformationen aufweisen: einen zweiten Typ von Hinweisinformationen zum Hinweisen auf das SLRB-Remapping des Sidelink-Interface.

11. Endgerät, bei welchem das Endgerät ein zweites Endgerät ist, und das zweite Endgerät ein Sidelink-Interface-Empfangsendgerät ist, **dadurch gekennzeichnet, dass** das Endgerät aufweist:
ein zweites Verarbeitungsmodul (601), das dazu ausgebildet ist, von einem ersten Endgerät gesendete Hinweisinformationen zu empfangen; und eine Operation, die einem SLRB-Remapping des Sidelink-Interface des ersten Endgeräts entspricht, durchzuführen, wobei die Hinweisinformationen einen zweiten Typ von Hinweisinformationen zum Hinweisen auf das SLRB-Remapping des Sidelink-Interface aufweisen;
wobei das zweite Verarbeitungsmodul (601) insbesondere dazu ausgebildet ist, nach dem Empfangen einer dem SLRB entsprechenden End-Marker-Control-PDU, eine SLRB-Rekonfiguration durchzuführen.

## Revendications

1. Procédé de changement de configuration de porteuse d'interface de liaison latérale, appliqué à un premier terminal, dans lequel le premier terminal est un terminal de transmission d'interface de liaison latérale, le procédé comprend :
lorsqu'un état du premier terminal est changé, l'obtention (101) d'informations de configuration de porteuse radio de liaison latérale (SLRB) après que l'état du premier terminal a été changé à partir d'un premier dispositif réseau desservant le premier terminal ou à partir d'une couche de protocole responsable de la gestion des informations de configuration de SLRB du premier terminal ;
la mise en oeuvre d'un remappage de SLRB de l'interface de liaison latérale selon les informations de configuration de SLRB après que l'état du premier terminal a été changé,
dans lequel la mise en oeuvre d'un remappage de SLRB de l'interface de liaison latérale comprend :
après envoi d'une PDU de commande de marqueur de fin correspondant à la SLRB, la mise en oeuvre d'une reconfiguration de SLRB,
dans lequel après obtention des informations de configuration de SLRB après que l'état du premier terminal a été changé à partir d'un premier dispositif réseau desservant le premier terminal ou à partir d'une couche de protocole responsable de la gestion des informations de configuration de SLRB du premier terminal, le procédé comprend en outre :
la transmission d'informations d'indication à un second terminal, dans lequel le second terminal est un terminal de communication qui forme une liaison latérale avec le premier terminal, et les informations d'indication comportent : un second type d'informations d'indication permettant d'indiquer un remappage de SLRB de l'interface de liaison latérale.

2. Procédé selon la revendication 1, dans lequel lorsqu'un état du premier terminal est changé, l'obtention (101) d'informations de configuration de SLRB après que l'état du premier terminal a été changé à partir d'un premier dispositif réseau desservant le premier terminal ou à partir d'une couche de protocole responsable de la gestion des informations de configuration de SLRB du premier terminal comporte :
lorsque l'état du premier terminal est changé, la transmission d'informations de demande au premier dispositif réseau desservant le premier terminal ou à la couche de protocole responsable de la gestion des informations de configuration de SLRB du premier terminal, et la demande pour obtenir les informations de configuration de SLRB après que l'état du premier terminal a été changé.

3. Procédé selon la revendication 1, dans lequel lorsqu'un état du premier terminal est changé, l'obtention (101) d'informations de configuration de SLRB après que l'état du premier terminal a été changé à partir d'un premier dispositif réseau desservant le premier terminal ou à partir d'une couche de protocole responsable de la gestion des informations de configuration de SLRB du premier terminal comporte :
lorsque l'état du premier terminal est changé en un état de commande de ressource radio CONNECTÉE (RRC_CONNECTED), l'obtention des informations de configuration de SLRB après que l'état du premier terminal a été changé à partir du premier dispositif réseau desservant le premier terminal par l'intermédiaire d'une signalisation dédiée RRC ; ou
lorsque l'état du premier terminal est changé en un état RRC_IDLE ou un état RRC_INACTIVE, l'obtention des informations de configuration de SLRB après que l'état du premier terminal a été changé à partir du premier dispositif réseau desservant le premier terminal par l'intermédiaire d'un bloc d'informations système (SIB) ; ou
lorsque l'état du premier terminal est changé en un état hors de couverture (OOC), l'obtention des informations de configuration de SLRB après que l'état du premier terminal a été changé à partir de la couche de protocole responsable de la gestion des informations de configuration de SLRB du premier terminal par l'intermédiaire d'une interaction entre couches.

4. Procédé selon la revendication 1, dans lequel l'état du premier terminal est changé, comporte l'un de ce qui suit :
le changement d'un état OOC en un état RRC_IDLE ou un état RRC_INACTIVE ;
le changement de l'état RRC_IDLE ou de l'état RRC_INACTIVE en un état RRC_CONNECTED;
le changement de l'état RRC_CONNECTED en l'état RRC_IDLE ou l'état RRC_INACTIVE ;
la resélection d'un premier terminal dans l'état RRC_IDLE d'une cellule à une autre cellule ;
le transfert d'un premier terminal dans l'état RRC_CONNECTED d'une cellule à une autre cellule.

5. Procédé selon la revendication 1, dans lequel la mise en oeuvre d'un remappage de SLRB de l'interface de liaison latérale selon les informations de configuration de SLRB après que l'état du premier terminal a été changé comporte :
après obtention des informations de configuration de SLRB après que l'état du premier terminal a été changé, la mise en oeuvre d'un remappage de SLRB de l'interface de liaison latérale selon les informations de configuration de SLRB après que l'état du premier terminal a été changé.

6. Procédé selon la revendication 1, dans lequel après transmission des informations d'indication au second terminal, le procédé comprend en outre :
la réception d'un message de réponse envoyé par le second terminal,
dans lequel la mise en oeuvre d'un remappage de SLRB de l'interface de liaison latérale selon les informations de configuration de SLRB après que l'état du premier terminal a été changé comporte :
après réception du message de réponse envoyé par le second terminal, la mise en oeuvre du remappage de SLRB de l'interface de liaison latérale selon les informations de configuration de SLRB après que l'état du premier terminal a été changé.

7. Procédé selon la revendication 1, dans lequel le premier dispositif réseau est une station de base de desserte, une unité répartie (DU) de desserte ou une unité centralisée (CU) de desserte du premier terminal ;
la couche de protocole responsable de la gestion des informations de configuration de SLRB du premier terminal est une couche RRC ou d'autres couches de protocole qui stockent les informations de configuration de SLRB.

8. Procédé de changement de configuration de porteuse d'interface de liaison latérale, appliqué à un second terminal, moyennant quoi le second terminal est un terminal de réception d'interface de liaison latérale, le procédé comprend :
la réception (201) d'informations d'indication envoyées par un premier terminal ; et la mise en oeuvre d'une opération correspondant à un remappage de SLRB de l'interface de liaison latérale du premier terminal, dans lequel les informations d'indication comprennent un second type d'informations d'indication permettant d'indiquer un remappage de SLRB de l'interface de liaison latérale ;
dans lequel la mise en oeuvre d'une opération correspondant à un remappage de SLRB de l'interface de liaison latérale du premier terminal comprend :
après réception d'une PDU de commande de marqueur de fin correspondant à la SLRB, la mise en oeuvre d'une reconfiguration de SLRB selon le second type d'informations d'indication.

9. Procédé selon la revendication 8, dans lequel la mise en oeuvre d'une opération correspondant à un remappage de SLRB de l'interface de liaison latérale du premier terminal comprend au moins l'un de ce qui suit :
la libération de la SLRB correspondant à l'interface de liaison latérale après réception du second type d'informations d'indication ;
lorsqu'une PDU de commande de marqueur de fin d'une couche de protocole d'adaptation de données de service correspondant à la SLRB est reçue, la libération de la SLRB correspondant à la PDU de commande de marqueur de fin,
dans lequel, après libération de la SLRB correspondant à l'interface de liaison latérale ou libération de la SLRB correspondant à la PDU de commande de marqueur de fin, la mise en oeuvre d'une opération correspondant à un remappage de SLRB de l'interface de liaison latérale du premier terminal comporte au moins l'un de ce qui suit :
lors de la réception d'un premier paquet de données correspondant à une combinaison d'une adresse de source, d'une adresse de destination et d'un identificateur de canal logique, l'établissement d'une SLRB correspondante et d'entités de protocole d'adaptation de données de service (SDAP), de protocole de convergence de données de paquet (PDCP) et de commande de liaison radio (RLC) correspondantes ;
lors de la réception d'un premier paquet de données correspondant à une combinaison de l'adresse de source, de l'adresse de destination, d'un type de transmission et de l'identificateur de canal logique, l'établissement de la SLRB correspondante et des entités SDAP, PDCP et RLC correspondantes.

10. Terminal, dans lequel le terminal est un premier terminal, et le premier terminal est un terminal de transmission d'interface de liaison latérale, le terminal comprend :
un premier module d'obtention (401), configuré pour, lorsqu'un état du premier terminal a été changé, obtenir des informations de configuration de porteuse radio de liaison latérale (SLRB) après que l'état du premier terminal a été changé à partir d'un premier dispositif réseau desservant le premier terminal ou partir d'une couche de protocole responsable de la gestion des informations de configuration de SLRB du premier terminal ;
un premier module de traitement (402), configuré pour mettre en oeuvre un remappage de SLRB de l'interface de liaison latérale selon les informations de configuration de SLRB après que l'état du premier terminal a été changé,
dans lequel le premier module de traitement (402) est spécifiquement configuré pour : après envoi d'une PDU de commande de marqueur de fin correspondant à la SLRB, mettre en oeuvre une reconfiguration de SLRB,
le terminal comprend en outre :
un premier module de transmission, configuré pour, transmettre des informations d'indication à un second terminal, dans lequel le second terminal est un terminal de communication qui forme une liaison latérale avec le premier terminal, et les informations d'indication comportent : un second type d'informations d'indication permettant d'indiquer un remappage de SLRB de l'interface de liaison latérale.

11. Terminal, dans lequel le terminal est un second terminal, et le second terminal est un terminal de réception d'interface de liaison latérale, le terminal comprend :
un second module de traitement (601), configuré pour recevoir des informations d'indication envoyées par un premier terminal ; et la mise en oeuvre d'une opération correspondant à un remappage de SLRB de l'interface de liaison latérale du premier terminal, dans lequel les informations d'indication comportent un second type d'informations d'indication permettant d'indiquer un remappage de SLRB de l'interface de liaison latérale ;
dans lequel le second module de traitement (601) est spécifiquement configuré pour : après réception d'une PDU de commande de marqueur de fin correspondant à la SLRB, mettre en oeuvre une reconfiguration de SLRB.
